# EUROPEAN PATENT SPECIFICATION

(11) **EP 4 209 106 B1**
(45) Date of publication and mention of the grant of the patent: **19.02.2025**
(21) Application number: 21789950.9
(22) Date of filing: 15.09.2021
(51) Int. Cl.: H04W 76/40, H04W 4/06, H04W 36/00, H04W 76/18

(54) **MANAGING MULTICAST AND BROADCAST SERVICES INTEREST INFORMATION**
VERWALTUNG VON INTERESSENINFORMATIONEN VON MULTICAST- UND RUNDFUNKDIENSTEN
GESTION D'INFORMATIONS D'INTÉRÊT DE SERVICES DE MULTIDIFFUSION ET DE DIFFUSION

(30) Priority: 18.09.2020 US 202063080197 P
(43) Date of publication of application: 12.07.2023
(73) Proprietor: Google LLC, Mountain View, CA 94043 (US)
(72) Inventor: WU, Chih-Hsiang, Mountain View, CA 94043 (US)
(74) Representative: Marks & Clerk GST
(86) International application number: PCT/US2021/050393
(87) International publication number: WO 2022/060787

(56) References cited:
- CN-A- 111 491 346
- RAN3 CHAIRMAN: "List of E-mail Discussions", vol. RAN WG3, no. Online; 20200817 - 20200828, 2 September 2020 (2020-09-02), XP051928191, Retrieved from the Internet <URL:https://ftp.3gpp.org/tsg_ran/WG3_Iu/TSGR3_109-e/Docs/R3-205451.zip R3-205451.doc> [retrieved on 20200902]

## Description

### FIELD OF THE DISCLOSURE

This disclosure relates to wireless communications and, more particularly, to managing unicast, broadcast, and multicast services.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

In telecommunication systems, the Packet Data Convergence Protocol (PDCP) sublayer of the radio protocol stack provides services such as transfer of user-plane data, ciphering, integrity protection, etc. For example, the PDCP layer defined for the Evolved Universal Terrestrial Radio Access (EUTRA) radio interface (see 3GPP specification TS 36.323) and New Radio (NR) (see 3GPP specification TS 38.323) provides sequencing of protocol data units (PDUs) in the uplink direction (from a user device, also known as a user equipment (UE), to a base station) as well as in the downlink direction (from the base station to the UE). Further, the PDCP sublayer provides services for signaling radio bearers (SRBs) to the Radio Resource Control (RRC) sublayer. The PDCP sublayer also provides services for data radio bearers (DRBs) to a Service Data Adaptation Protocol (SDAP) sublayer or a protocol layer such as an Internet Protocol (IP) layer, an Ethernet protocol layer, and an Internet Control Message Protocol (ICMP) layer. Generally speaking, the UE and a base station can use SRBs to exchange RRC messages as well as non-access stratum (NAS) messages, and can use DRBs to transport data on a user plane.

The UE in some scenarios can concurrently utilize resources of multiple nodes (e.g., base stations or components of a distributed base station or disaggregated base station) of a radio access network (RAN), interconnected by a backhaul. When these network nodes support different radio access technologies (RATs), this type of connectivity is referred to as Multi-Radio Dual Connectivity (MR-DC). When operating in MR-DC, the cell(s) associated with the base station operating as a master node (MN) define a master cell group (MCG), and the cells associated with the base station operating as a secondary node (SN) define the secondary cell group (SCG). The MCG covers a primary cell (PCell) and zero, one, or more secondary cells (SCells), and the SCG covers a primary secondary cell (PSCell) and zero, one, or more SCells. The UE communicates with the MN (via the MCG) and the SN (via the SCG). In other scenarios, the UE utilizes resources of one base station at a time, i.e., single connectivity (SC). The UE in SC only communicates with the MN (via the MCG). One base station and/or the UE determines that the UE should establish a radio connection with another base station. For example, one base station can determine to hand the UE over to the second base station, and initiate a handover procedure. The UE in other scenarios can concurrently utilize resources of a RAN node (e.g., a single base station or a component of a distributed base station or a disaggregated base station), interconnected by a backhaul.

UEs can use several types of SRBs and DRBs. So-called SRB1 resources carry RRC messages, which in some cases include NAS messages over the dedicated control channel (DCCH), and SRB2 resources support RRC messages that include logged measurement information or NAS messages, also over the DCCH but with lower priority than SRB1 resources. More generally, SRB1 and SRB2 resources allow the UE and the MN to exchange RRC messages related to the MN and embed RRC messages related to the SN, and also can be referred to as MCG SRBs. SRB3 resources allow the UE and the SN to exchange RRC messages related to the SN, and can be referred to as SCG SRBs. Split SRBs allow the UE to exchange RRC messages directly with the MN via lower layer resources of the MN and the SN. Further, DRBs terminated at the MN and using the lower-layer resources of only the MN can be referred as MCG DRBs, DRBs terminated at the SN and using the lower-layer resources of only the SN can be referred as SCG DRBs, and DRBs terminated at the MCG but using the lower-layer resources of the MN, the SN, or both the MN and the SN can be referred to as split DRBs.

UEs can perform handover procedures to switch from one cell to another, whether in single connectivity (SC) or DC operation. These procedures involve messaging (e.g., RRC signaling and preparation) among RAN nodes and the UE. The UE may handover from a cell of a serving base station to a target cell of a target base station, or from a cell of a first distributed unit (DU) of a serving base station to a target cell of a second DU of the same base station, depending on the scenario. In DC scenarios, UEs can perform PSCell change procedures to change PSCells. These procedures involve messaging (e.g., RRC signaling and preparation) among RAN nodes and the UE. The UE may perform PSCell change from a PSCell of a serving SN to a target PSCell of a target SN, or from a PSCell of a source DU of a base station to a PSCell of a target DU of the same base station, depending on the scenario.

Base stations that operate according to fifth-generation (5G) New Radio (NR) requirements support significantly larger bandwidth than fourth-generation (4G) base stations. Accordingly, the Third Generation Partnership Project (3GPP) has proposed that for Release 15, user equipment units (UEs) support a 100 MHz bandwidth in frequency range 1 (FR1) and a 400 MHz bandwidth in frequency range (FR2). Due to the relatively wide bandwidth of a typical carrier, 3GPP has proposed that for Release 17, a 5G NR base station can provide multicast and/or broadcast services (MBS) to UEs that can be useful in many content delivery applications, such as transparent IPv4/IPv6 multicast delivery, IPTV, software delivery over wireless, group communications, IoT applications, V2X applications, emergency messages related to public safety, to name a few.

A UE that is receiving or interested in receiving an MBS can transmit an MBS interest indication to a network. Based on the MBS interest indication, the network attempts to enable the UE to receive MBS and unicast services subject to the capabilities of the UE. In the MBS interest indication, the UE can indicate a set of frequencies (including one or more frequencies) where the UE is receiving or is interested in receiving MBS. The MBS interest indication may also indicate a list of MBS that the UE is receiving or is interested in receiving on the indicated one or more frequencies. The UE may still transmit the MBS interest indication regardless of whether the serving cell supports MBS. In some cases, the UE can send a first MBS interest indication to the network, and send a second, updated MBS interest indication at a later time.

However, it is not clear how the UE and/or the network should manage the MBS interest indication in certain scenarios. For example, when the UE encounters failure on a radio connection with a base station of the RAN, or when the UE transitions between an inactive state and a connected state, it is not clear how the UE and/or the RAN is to handle the MBS interest indication. More generally, a RAN cannot always reconcile the radio connection failure or UE state transitions with the MBS interest indication previously provided by the UE.

CN 111491346 A relates to a multicast communication method and device, a computer readable medium and electronic equipment. The multicast communication method comprises the steps of: receiving URSP information sent by a strategy control function entity, wherein the URSP information comprises URSP rules supporting multicast services; querying the URSP rule supporting the multicast service according to a multicast network address corresponding to a multicast service context needing to be activated to obtain network slice information and data network name information; and activating MBS context information of user equipment based on the network slice information and the data network name information so as to join in a multicast group corresponding to the multicast network address for multicast communication.

### SUMMARY

Generally speaking, a UE and/or a RAN implement the techniques of this disclosure to manage information related to multicast and/or broadcast services (MBS). A UE transmits to the RAN an MBS interest indication that indicates a configuration according to which the UE prefers to receive an MBS transmission (referred to in this disclosure as an "MBS interest configuration"). The MBS interest configuration may include a set of frequencies where the UE is receiving or is interested in receiving MBS and a list of MBS that the UE is receiving or is interested in receiving on the indicated frequencies. In response to determining that a radio connection between the UE and the RAN is to be modified, the UE can determine to either retain or release the configuration. If the UE retains the configuration, the UE can later transmit an MBS interest indication update to the RAN. If the UE releases the configuration, the UE may transmit another MBS interest indication to the RAN after modifying the radio connection.

Likewise, a node of the RAN can also receive an MBS interest indication from the UE, and either retain or release the configuration included in the MBS interest indication in response to determining that a radio connection between the UE and the RAN is to be modified.

Trigger events that can cause the UE and/or the RAN to determine to release or retain the MBS interest indication include the UE detecting a failure on the radio connection, or the UE suspending, resuming, or reestablishing the radio connection with the RAN.

One embodiment of these techniques is a method implemented in a UE for managing information related to multicast and/or broadcast services (MBS), when the UE has a radio connection with a radio access network (RAN). The method executes by processing hardware and includes transmitting, to the RAN, an MBS interest indication that indicates a configuration according to which the UE prefers to receive an MBS transmission. The method also includes determining, subsequently to the transmitting, that the radio connection with the UE is to modified, and processing the configuration in response to the determination.

Another example embodiment of these techniques is a UE including processing hardware and configured to implement the method above.

A further embodiment of these techniques is a method implemented in a node of a RAN for managing information related to MBS, when a UE has a radio connection with the RAN. The method executes by processing hardware and includes receiving an MBS interest indication that indicates a configuration according to which the UE prefers to receive an MBS transmission. The method also includes determining that the radio connection with the UE is to be modified, and processing the configuration in response to the determination.

Yet another example embodiment of these techniques is a RAN node including processing hardware and configured to implement the method above.

### BRIEF DESCRIPTION OF THE DRAWINGS

Fig. 1A is a block diagram of an example system in which a UE and/or RAN can implement the techniques of this disclosure for managing MBS interest information;
Fig. 1B is a block diagram of an example base station in which a centralized unit (CU) and a distributed unit (DU) can operate in the system of Fig. 1A;
Fig. 2 is a block diagram of an example protocol stack according to which the UE of Fig. 1A can communicate with base stations of Fig. 1A;
Fig. 3A is a messaging diagram of an example scenario in which the UE and/or distributed base station releases an MBS interest configuration after suspending a radio connection between the UE and the distributed base station;
Fig. 3B is a messaging diagram of an example scenario in which the UE and/or distributed base station retains an MBS interest configuration after suspending a radio connection between the UE and the distributed base station;
Fig. 4A is a messaging diagram of an example scenario in which a UE suspends a radio connection with a source base station, and the source base station forwards an MBS interest indication, which indicates an MBS interest configuration for the UE, to a target base station, which subsequently releases the MBS interest configuration before resuming the radio connection with the UE;
Fig. 4B is a messaging diagram of an example scenario in which a UE suspends a radio connection with a source base station, and the source base station forwards an MBS interest indication, which indicates an MBS interest configuration for the UE, to a target base station, which subsequently retains the MBS interest configuration before resuming the radio connection with the UE;
Fig. 5A is a messaging diagram of an example scenario in which the UE and/or distributed base station releases an MBS interest configuration after the UE detects a failure on a radio connection between the UE and the distributed base station;
Fig. 5B is a messaging diagram of an example scenario in which the UE and/or distributed base station retains an MBS interest configuration after the UE detects a failure on a radio connection between the UE and the distributed base station;
Fig. 6A is a messaging diagram of an example scenario in which a UE detects a failure on a radio connection with a source base station, and the source base station forwards an MBS interest indication, which indicates an MBS interest configuration for the UE, to a target base station, which subsequently releases the MBS interest configuration before reestablishing the radio connection with the UE;
Fig. 6B is a messaging diagram of an example scenario in which a UE detects a failure on a radio connection with a source base station, and the source base station forwards an MBS interest indication, which indicates an MBS interest configuration for the UE, to a target base station, which subsequently retains the MBS interest configuration before reestablishing the radio connection with the UE;
Fig. 7A is a messaging diagram of an example scenario in which an SN and/or a UE releases an MBS interest configuration after an SN release procedure;
Fig. 7B is a messaging diagram of an example scenario in which an SN and/or a UE retains an MBS interest configuration after an SN release procedure;
Fig. 8A is a messaging diagram of an example scenario in which an SN and/or a UE releases an MBS interest configuration after suspending a radio connection between the UE and the SN;
Fig. 8B is a messaging diagram of an example scenario in which an SN and/or a UE retains an MBS interest configuration after suspending a radio connection between the UE and the SN;
Fig. 9A is a flow diagram of an example method that includes releasing or retaining an MBS interest configuration in response to receiving an RRC message, which can be implemented in the UE of Fig. 1A;
Fig. 9B is a flow diagram of an example method that includes releasing an MBS interest configuration in response to or during an RRC resume procedure, which can be implemented in the UE of Fig. 1A;
Fig. 9C is a flow diagram of an example method that includes releasing an MBS interest configuration before communicating data over a resumed radio connection, which can be implemented in the UE of Fig. 1A;
Fig. 9D is a flow diagram of an example method that includes retaining an MBS interest configuration in response to receiving an RRC suspension message, which can be implemented in the UE of Fig. 1A;
Fig. 10 is a flow diagram of an example method that includes determining that a UE is no longer interested in receiving MBS, and either notifying or refraining from notifying the RAN of the determination based on whether the UE experienced a state transition, which can be implemented in the UE of Fig. 1A;
Fig. 11A is a flow diagram of an example method that includes releasing or retaining an MBS interest configuration in response to an event that causes a UE to transition from DC to SC, which can be implemented in the UE of Fig. 1A;
Fig. 11B is a flow diagram of an example method that includes releasing or retaining an MBS interest configuration in response to suspending a radio connection with an SN, which can be implemented in the UE of Fig. 1A;
Fig. 11C is a flow diagram of an example method that includes releasing or retaining an MBS interest configuration in response to detecting a failure on a radio connection with an MN, which can be implemented in the UE of Fig. 1A;
Fig. 12A is a flow diagram of an example method that includes determining whether to retransmit an MBS interest indication to a RAN after detecting a failure on a radio connection with the RAN based on the time between initially transmitting the MBS interest indication and detecting the failure, which can be implemented in the UE of Fig. 1A;
Fig. 12B is a flow diagram of an example method that includes determining whether to retransmit an MBS interest indication to a RAN after an RRC reestablishment procedure based on the cell on which the UE performs the RRC reestablishment procedure, which can be implemented in the UE of Fig. 1A;
Fig. 13 is a flow diagram of an example method that includes forwarding an MBS interest indication of a UE to a target node of a RAN based on a type of RRC procedure performed within the RAN, which can be implemented in a source base station of Figs. 1A or 1B;
Fig. 14 is a flow diagram of an example method that includes releasing an MBS interest configuration received in a response to a request transmitted to a source base station, which can be implemented in a target base station of Figs. 1A or 1B;
Fig. 15 is a flow diagram of an example method that includes receiving an MBS interest indication of a UE within a RAN and subsequently releasing or retaining the MBS interest configuration based on a type of RRC procedure performed with the UE, which can be implemented in a target base station of Figs. 1A or 1B;
Fig. 16 is a flow diagram of an example method for managing information related to MBS, which can be implemented by the UE of Fig. 1A; and
Fig. 17 is a flow diagram of an example method for managing information related to MBS, which can be implemented by a node of a RAN (e.g., a CU or a base station) of Fig. 1A.

### DETAILED DESCRIPTION OF THE DRAWINGS

A UE, which may already be configured to receive non-MBS from a RAN, can transmit an MBS interest indication to the RAN, so that the RAN can (re)configure the UE to receive MBS. In some implementations and scenarios, by transmitting the MBS interest indication to the RAN, a UE can convey to the RAN that the UE is interested in receiving (or attempting to receive) MBS, but not yet configured to receive MBS. In other implementations and scenarios, the MBS interest indication can convey that the UE is configured to receive MBS on a certain frequency carrier (e.g., of a first RAT) but not on another desired frequency carrier (e.g., of a second RAT), to indicate that the UE is only able to receive or is currently receiving MBS on the configured carrier frequency but not on the desired carrier frequency. Generally speaking, the techniques of this disclosure allow nodes of the RAN and/or the UE to manage an MBS interest indication in various scenarios, such as scenarios in which the UE detects a failure on a radio connection with the RAN or transitions to or from an inactive state.

As used herein, "MBS" can refer to multicast service(s), broadcast service(s), or both multicast and broadcast services. In addition, as used in this disclosure, MBS interest indication indicates a configuration according to which the UE prefers to receive an MBS transmission (i.e., an MBS interest configuration). The MBS interest configuration, for example, includes frequencies where the UE is interested in receiving MBS, a list of MBS that the UE is interested in receiving, and/or frequencies on which the UE is interested particular MBS (e.g., a first frequency for a first MBS service, a second frequency for a second MBS service and a third MBS service, etc.).

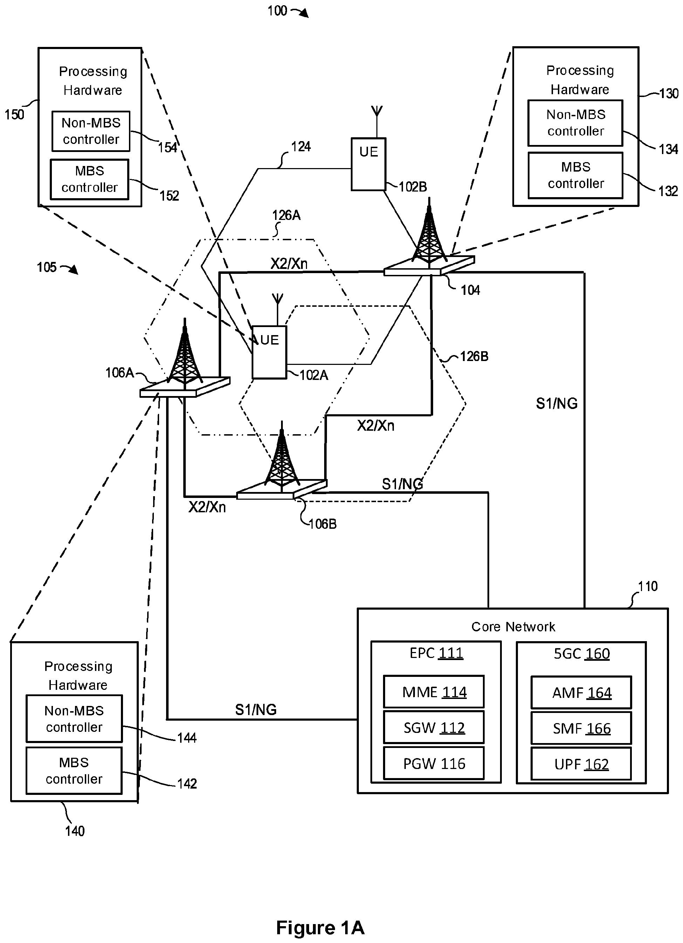

Fig. 1A depicts an example wireless communication system 100 that can implement the techniques of this disclosure for managing MBS interest information. The wireless communication system 100 includes UE 102A and UE 102B, as well as base stations 104, 106A, 106B of a radio access network (RAN) (e.g., RAN 105) that are connected to a core network (CN) 110. To ease readability, UE 102 is used herein to represent the UE 102A, the UE 102B, or both the UE 102A and UE 102B, unless otherwise specified. The base stations 104, 106A, 106B can be any suitable type, or types, of base stations, such as an evolved node B (eNB), a next-generation eNB (ng-eNB), or a 5G Node B (gNB), for example. As a more specific example, the base station 104 can be an eNB or a gNB, and the base stations 106A and 106B can be gNBs.

The base station 104 supports a cell 124, the base station 106A supports a cell 126A, and the base station 106B supports a cell 126B. The base station 104 may additionally support a cell 125A. The cell 124 partially overlaps with both of cells 126A and 126B, such that the UE 102 can be in range to communicate with base station 104 while simultaneously being in range to communicate with base station 106A or 106B (or in range to detect or measure the signal from both base stations 106A and 106B). The overlap can make it possible for the UE 102 to hand over between cells (e.g., from cell 124 to cell 126A or 126B) or base stations (e.g., from base station 104 to base station 106A or base station 106B) before the UE 102 experiences radio link failure, for example. Moreover, the overlap allows the various dual connectivity (DC) scenarios discussed below. For example, the UE 102 can communicate in DC with the base station 104 (operating as an MN) and the base station 106A (operating as an SN) and, upon completing a handover to base station 106B, can communicate with the base station 106B (operating as an MN). As another example, the UE 102 can communicate in DC with the base station 104 (operating as an MN) and the base station 106A (operating as an SN) and, upon completing an SN change, can communicate with the base station 104 (operating as an MN) and the base station 106B (operating as an SN).

More particularly, when the UE 102 is in DC with the base station 104 and the base station 106A, the base station 104 operates as a master eNB (MeNB), a master ng-eNB (Mng-eNB), or a master gNB (MgNB), and the base station 106A operates as a secondary gNB (SgNB) or a secondary ng-eNB (Sng-eNB).

In non-MBS operation, the UE 102 can use a radio bearer (e.g., a DRB or an SRB) that at different times terminates at an MN (e.g., the base station104) or an SN (e.g., the base station 106A). For example, after handover or SN change to the base station 106B, the UE 102 can use a radio bearer (e.g., a DRB or an SRB) that at different times terminates at the base station 106B. The UE 102 can apply one or more security keys when communicating on the radio bearer, in the uplink (from the UE 102 to a base station) and/or downlink (from a base station to the UE 102) direction. In the non-MBS operation, the UE 102 transmits data via the radio bearer on (*i.e.,* within) an uplink BWP of a cell to the base station and/or receives data via the radio bearer on a downlink BWP of the cell from the base station. The uplink BWP can be an initial uplink BWP or a dedicated uplink BWP, and the downlink BWP can be an initial DL BWP or a dedicated downlink BWP.

In MBS operation, the UE 102 can use a radio bearer (e.g., an MBS radio bearer (MRB)) that at different times terminates at an MN (e.g., the base station 104) or an SN (e.g., the base station 106A). For example, after handover or SN change to the base station 106B, the UE 102 can use a radio bearer (e.g., an MRB) that at different times terminates at the base station 106B. In some implementations, the UE 102 can apply one or more security keys to decrypt data and/or check integrity of the data when receiving the data on the radio bearer, in the downlink (from a base station to the UE 102) direction. In other implementations, the UE 102 can apply no security key to data received on the radio bearer. In the MBS operation, the UE 102 receives MBS data (e.g., via the MRB) on an MBS downlink BWP of a cell from a base station. Alternatively, the MN or the SN can configure the UE 102 to use a DRB to receive an MBS.

The base station 104 includes processing hardware 130, which can include one or more general-purpose processors (e.g., central processing units (CPUs)) and a computer-readable memory storing machine-readable instructions executable on the one or more general-purpose processor(s), and/or special-purpose processing units. The processing hardware 130 in the example implementation in Fig. 1A includes a base station MBS controller 132 that is configured to manage reception of MBS interest indications or control transmission of MBS data received from the CN 110 or an edge server. For example, the base station MBS controller 132 can be configured to support Radio Resource Control (RRC) configurations, procedures and messaging associated with handover procedures, PSCell change procedures, unicast reconfiguration procedures, and/or to support the necessary operations, as discussed below. The processing hardware 130 can include a base station unicast controller 134 configured to manage or control one or more RRC configurations and/or RRC procedures when the base station 104 operates as an MN or SN during a non-MBS operation.

The base station 106A includes processing hardware 140, which can include one or more general-purpose processors (e.g., CPUs) and a computer-readable memory storing machine-readable instructions executable on the general-purpose processor(s), and/or special-purpose processing units. The processing hardware 140 in the example implementation of Fig. 1A includes a base station MBS controller 142 that is configured to manage reception of MBS interest indications or control transmission of MBS data received from the CN 110 or an edge server. For example, the base station MBS controller 142 can be configured to support RRC configurations, procedures and messaging associated with handover procedures, PSCell change procedures, unicast reconfiguration procedures, and/or to support the necessary operations, as discussed below. The processing hardware 140 can include a base station unicast controller 144 configured to manage or control one or more RRC configurations and/or RRC procedures when the base station 106A operates as an MN or SN during a non-MBS operation. While not shown in Fig. 1A, the base station 106B can include processing hardware similar to the processing hardware 130 of the base station 104 or the processing hardware 140 of the base station 106A.

The UE 102 includes processing hardware 150, which can include one or more general-purpose processors (e.g., CPUs) and a computer-readable memory storing machine-readable instructions executable on the general-purpose processor(s), and/or special-purpose processing units. The processing hardware 150 in the example implementation of Fig. 1A includes a UE MBS controller 152 that is configured to manage transmission of MBS interest indications or control reception of MBS data. For example, the UE MBS controller 152 can be configured to support RRC configurations, procedures and messaging associated with handover procedures, PSCell change procedures, MBS operation, and/or to support the necessary operations, as discussed below. The processing hardware 150 can include a UE unicast controller 154 configured to manage or control one or more RRC configurations and/or RRC procedures in accordance with any of the implementations discussed below, when the UE 102 communicates with an MN and/or an SN during a non-MBS operation.

The CN 110 can be an evolved packet core (EPC) 111 or a fifth-generation core (5GC) 160, both of which are depicted in Fig. 1A. The base station 104 can be an eNB supporting an S1 interface for communicating with the EPC 111, an ng-eNB supporting an NG interface for communicating with the 5GC 160, or a gNB that supports an NR radio interface as well as an NG interface for communicating with the 5GC 160. The base station 106A can be an EUTRA-NR DC (EN-DC) gNB (en-gNB) with an S1 interface to the EPC 111, an en-gNB that does not connect to the EPC 111, a gNB that supports the NR radio interface and an NG interface to the 5GC 160, or a ng-eNB that supports an EUTRA radio interface and an NG interface to the 5GC 160. To directly exchange messages with each other during the scenarios discussed below, the base stations 104, 106A, and 106B can support an X2 or Xn interface.

Among other components, the EPC 111 can include a Serving Gateway (SGW) 112, a Mobility Management Entity (MME) 114, and a Packet Data Network Gateway (PGW) 116. The S-GW 112 is generally configured to transfer user-plane packets related to audio calls, video calls, Internet traffic, etc., and the MME 114 is configured to manage authentication, registration, paging, and other related functions. The P-GW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management (AMF) 164, and/or Session Management Function (SMF) 166. The UPF 162 is generally configured to transfer user-plane packets related to audio calls, video calls, Internet traffic, etc., the AMF 164 is configured to manage authentication, registration, paging, and other related functions, and the SMF 166 is configured to manage PDU sessions. The UPF 162, AMF 164 and/or the SMF 166 can be configured to support MBS. For example, the SMF 166 can be configured to manage or control MBS transport, configure the UPF 162 and/or RAN 105 for MBS flows, and/or manage or configure MBS session(s) or PDU Session(s) for MBS for UE 102. The UPF 162 is configured to transfer MBS data packets to audio, video, Internet traffic, etc. to the RAN 105. The UPF 162 and/or SMF 166 can be configured for both unicast service and MBS, or for MBS only.

Generally, the wireless communication network 100 can include any suitable number of base stations supporting NR cells and/or EUTRA cells. More particularly, the EPC 111 or the 5GC 160 can be connected to any suitable number of base stations supporting NR cells and/or EUTRA cells. Although the examples below refer specifically to specific CN types (EPC, 5GC) and RAT types (5G NR and EUTRA), in general the techniques of this disclosure can also apply to other suitable radio access and/or core network technologies such as sixth generation (6G) radio access and/or 6G core network or 5G NR-6G DC, for example.

In different configurations or scenarios of the wireless communication system 100, the base station 104 can operate as an MeNB, an Mng-eNB, or an MgNB, the base station 106B can operate as an MeNB, an Mng-eNB, an MgNB, an SgNB, or an Sng-eNB, and the base station 106A can operate as an SgNB or an Sng-eNB. The UE 102 can communicate with the base station 104 and the base station 106A or 106B via the same radio access technology (RAT), such as EUTRA or NR, or via different RATs.

When the base station 104 is an MeNB and the base station 106A is an SgNB, the UE 102 can be in EN-DC with the MeNB 104 and the SgNB 106A. When the base station 104 is an Mng-eNB and the base station 106A is an SgNB, the UE 102 can be in next generation (NG) EUTRA-NR DC (NGEN-DC) with the Mng-eNB 104 and the SgNB 106A. When the base station 104 is an MgNB and the base station 106A is an SgNB, the UE 102 can be in NR-NR DC (NR-DC) with the MgNB 104 and the SgNB 106A. When the base station 104 is an MgNB and the base station 106A is an Sng-eNB, the UE 102 can be in NR-EUTRA DC (NE-DC) with the MgNB 104 and the Sng-eNB 106A.

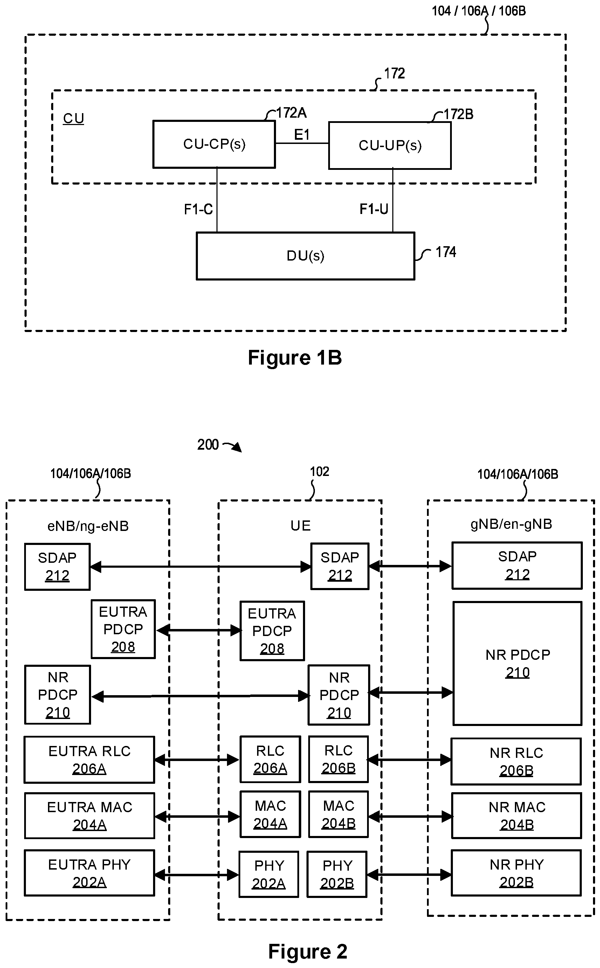

Fig. 1B depicts an example, distributed or disaggregated implementation of any one or more of the base stations 104, 106A, 106B. In this implementation, the base station 104, 106A, or 106B includes a centralized unit (CU) 172 and one or more DUs 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include the processing hardware 130 or 140 of Fig. 1A.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a medium access control (MAC) controller configured to manage or control one or more MAC operations or procedures (e.g., a random access procedure), and a radio link control (RLC) controller configured to manage or control one or more RLC operations or procedures when the base station (e.g., base station 106A) operates as an MN or an SN. The processing hardware can also include a physical layer controller configured to manage or control one or more physical layer operations or procedures.

In some implementations, the CU 172 can include a logical node CU-CP 172A that hosts the control plane part of the Packet Data Convergence Protocol (PDCP) protocol of the CU 172. The CU 172 can also include logical node(s) CU-UP 172B that hosts the user plane part of the PDCP protocol and/or Service Data Adaptation Protocol (SDAP) protocol of the CU 172. The CU-CP 172A can transmit non-MBS control information and MBS control information, and the CU-UP 172B can transmit the non-MBS data packets and MBS data packets.

The CU-CP 172A can be connected to multiple CU-UP 172B through the E1 interface. The CU-CP 172A selects the appropriate CU-UP 172B for the requested services for the UE 102. In some implementations, a single CU-UP 172B can be connected to multiple CU-CP 172A through the E1 interface. The CU-CP 172A can be connected to one or more DU 174s through an F1-C interface. The CU-UP 172B can be connected to one or more DU 174 through the F1-U interface under the control of the same CU-CP 172A. In some implementations, one DU 174 can be connected to multiple CU-UP 172B under the control of the same CU-CP 172A. In such implementations, the connectivity between a CU-UP 172B and a DU 174 is established by the CU-CP 172A using Bearer Context Management functions.

Fig. 2 illustrates, in a simplified manner, an example protocol stack 200 according to which the UE 102 can communicate with an eNB/ng-eNB or a gNB (e.g., one or more of the base stations 104, 106A, 106B).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to the EUTRA PDCP sublayer 208 and, in some cases, to the NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides RLC channels to the NR PDCP sublayer 210. The UE 102, in some implementations, supports both the EUTRA and the NR stack as shown in Fig. 2, to support handover between EUTRA and NR base stations and/or to support DC over EUTRA and NR interfaces. Further, as illustrated in Fig. 2, the UE 102 can support layering of NR PDCP 210 over EUTRA RLC 206A, and an SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

On a control plane, the EUTRA PDCP sublayer 208 and the NR PDCP sublayer 210 can provide SRBs to exchange RRC messages or non-access-stratum (NAS) messages, for example. On a user plane, the EUTRA PDCP sublayer 208 and the NR PDCP sublayer 210 can provide DRBs to support data exchange. Data exchanged on the NR PDCP sublayer 210 can be SDAP PDUs, Internet Protocol (IP) packets or Ethernet packets.

In scenarios where the UE 102 operates in EN-DC with the base station 104 operating as an MeNB and the base station 106A operating as an SgNB, the wireless communication system 100 can provide the UE 102 with an MN-terminated bearer that uses EUTRA PDCP sublayer 208, or an MN-terminated bearer that uses NR PDCP sublayer 210. The wireless communication system 100 in various scenarios can also provide the UE 102 with an SN-terminated bearer, which uses only the NR PDCP sublayer 210. The MN-terminated bearer can be an MCG bearer or a split bearer. The SN-terminated bearer can be an SCG bearer or a split bearer. The MN-terminated bearer can be an SRB (e.g., SRB1 or SRB2), a DRB, or an MRB. The SN-terminated bearer can be an SRB, a DRB, or an MRB.

In some implementations, a base station (e.g., base station 104, 106A, or 106B) broadcasts MBS data packets (e.g., including application content such as text, voice or video packets) via one or more MBS radio bearers (MRB(s)), and in turn the UE 102 receives the MBS data packets via the MRB(s). The base station can include configuration(s) of the MRB(s) in MBS control information described below. In some implementations, the base station broadcasts the MBS data packets via RLC sublayer 206, MAC sublayer 204, and PHY sublayer 202, and correspondingly, the UE 102 uses PHY sublayer 202, MAC sublayer 204, and RLC sublayer 206 to receive the MBS data packets. In such implementations, the base station and the UE 102 may not use PDCP sublayer 208 and a SDAP sublayer 212 to communicate the MBS data packets. In other implementations, the base station broadcasts the MBS data packets via PDCP sublayer 208, RLC sublayer 206, MAC sublayer 204, and PHY sublayer 202, and correspondingly, the UE 102 uses PHY sublayer 202, MAC sublayer 204, RLC sublayer 206 and PDCP sublayer 208 to receive the MBS data packets. In such implementations, the base station and the UE 102 may not use a SDAP sublayer 212 to communicate the MBS data packets. In yet other implementations, the base station broadcasts the MBS data packets via the SDAP sublayer 212, PDCP sublayer 208, RLC sublayer 206, MAC sublayer 204 and PHY sublayer 202, and correspondingly, the UE 102 uses PHY sublayer 202, MAC sublayer 204, RLC sublayer 206, PDCP sublayer 208, and the SDAP sublayer 212 to receive the MBS data packets.

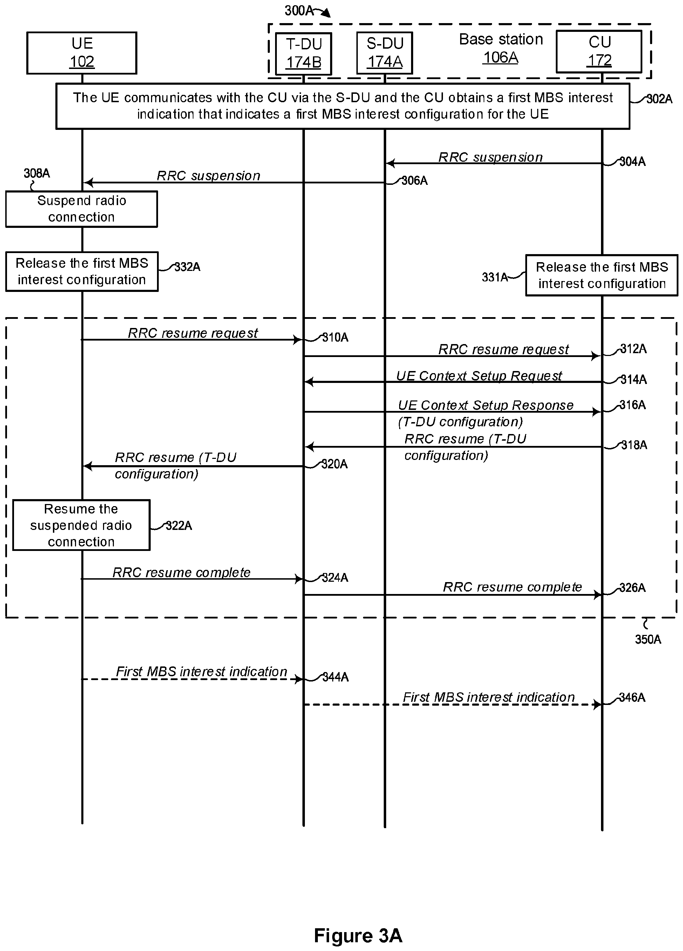

Figs. 3A-8B are messaging diagrams of example scenarios in which a UE and/or nodes of a RAN manage MBS interest indications that indicate MBS interest configurations. Generally speaking, events in Figs. 3A-8B that are similar are labeled with similar reference numbers (e.g., event 302A is similar to event 302B, 402A, 402B, etc.), with differences discussed below where appropriate. With the exception of the differences shown in the figures and discussed below, any of the alternative implementations discussed with respect to a particular event (e.g., for messaging and processing) may apply to events labeled with similar reference numbers in other figures.

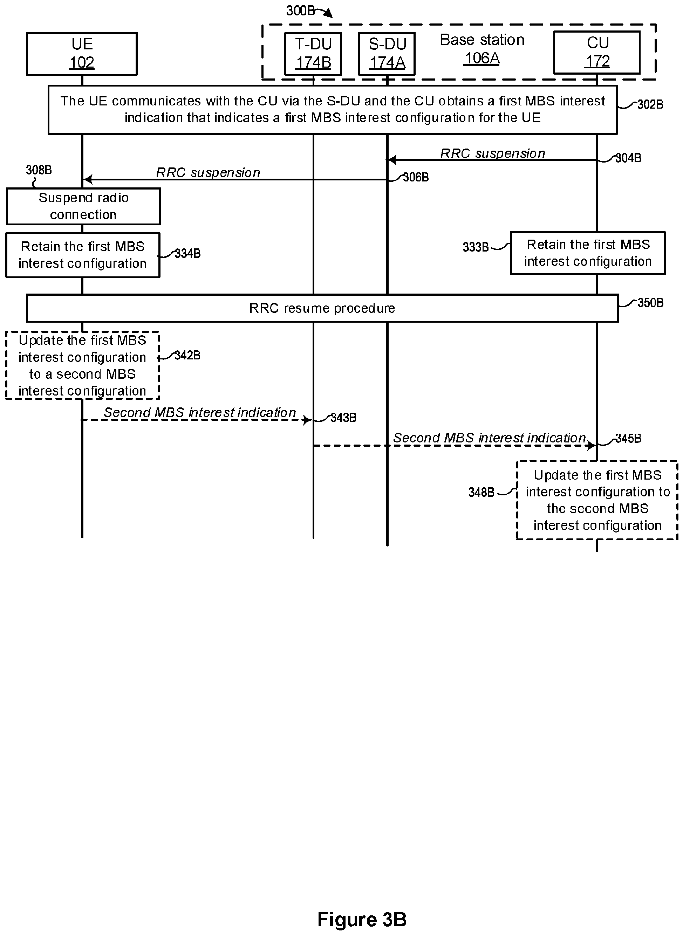

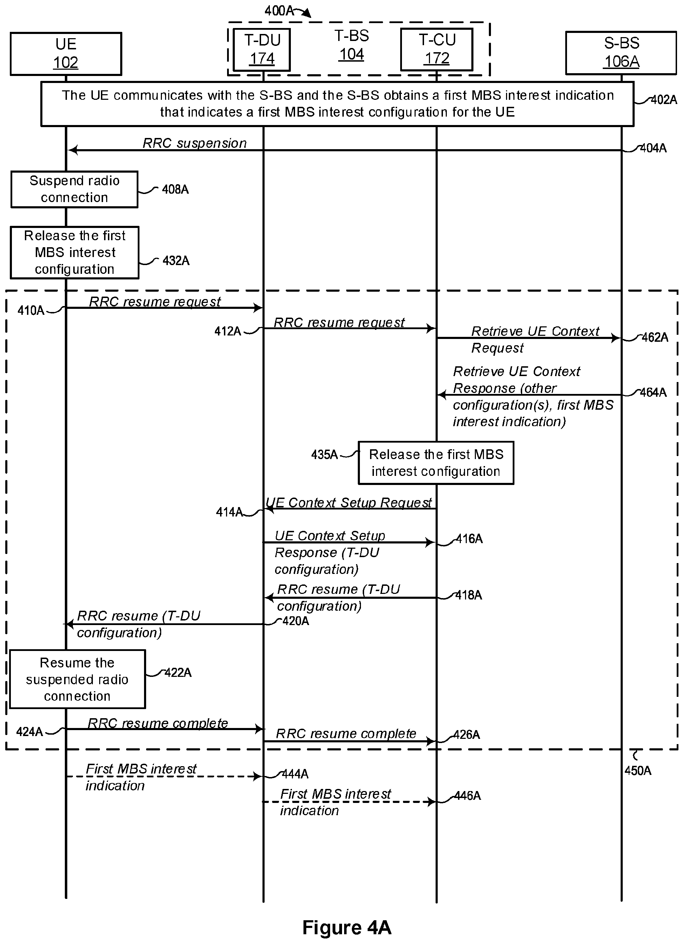

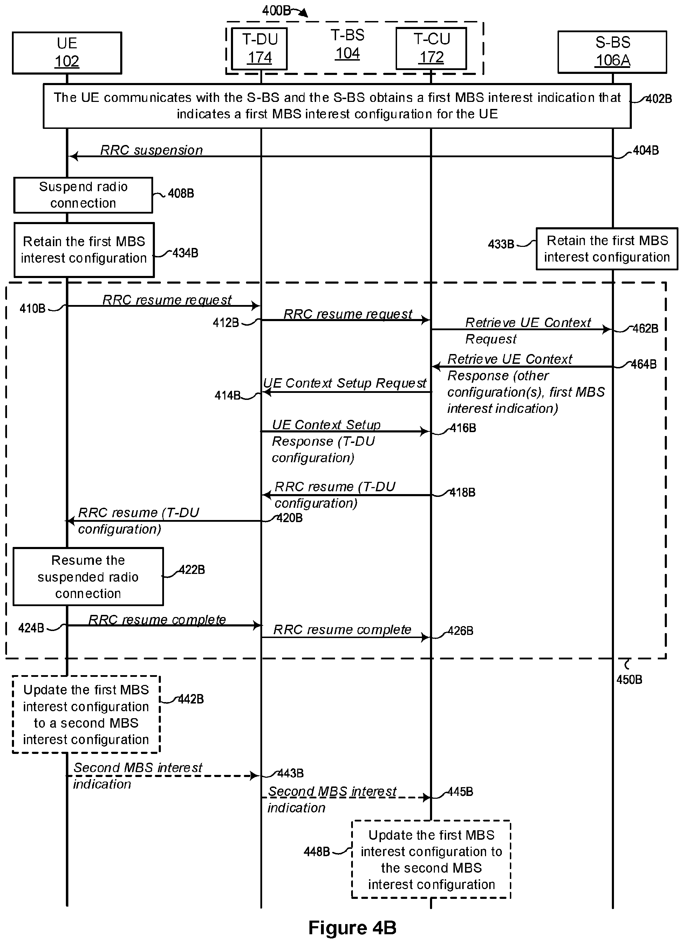

Further, the Figs. 3A-8B depict scenarios in which a UE processes an MBS interest configuration by either releasing or retaining the MBS interest configuration after a triggering event, such as determining that a radio connection with the RAN is to be modified. In a given scenario, a base station of the RAN generally follows the same logic as the UE with respect to releasing or retaining the MBS interest configuration. Said another way, the UE and the RAN generally perform matching behaviors, either releasing or retaining the MBS interest configuration, such that the UE and the RAN manage the MBS interest configuration in a consistent manner. For example, as discussed below with respect to Fig. 3A, a UE releases an MBS interest configuration in response to determining to suspend a radio connection with a CU of a base station. Likewise, the CU also releases the MBS interest configuration after determining to suspend the radio connection or suspending the radio connection. In contrast, in a similar scenario in Fig. 3B, a UE retains an MBS interest configuration, and the CU also retains the MBS interest configuration. In other examples, such as in Figs. 4A-4B, a UE releases or retains an MBS interest configuration in response to determining to suspend a radio connection with a source base station, a target base station receives the MBS interest configuration from the source base station, and the target base station releases or retains the MBS interest configuration upon or during an RRC resume procedure. For example, in Fig. 4A, the UE and the target base station release the MBS interest configuration, and in Fig. 4B, the UE and the target base station retain the MBS interest configuration.

Referring first to a scenario 300A of Fig. 3A, the base station 106A includes a DU 174A, a DU 174B, and a CU 172. Initially, the UE 102 communicates 302A UL PDUs and/or DL PDUs with the CU 172 via a source DU (S-DU) 174A, e.g., on cell 125A. In some implementations, the UE 102 is in single connectivity (SC) with the base station 106A. In other implementations, the UE 102 is in dual connectivity (DC) with the base station 106A and a base station 104 (not shown in Fig. 3A), where the base station 106A can operate as an MN. The CU 172 obtains 302A a first MBS interest indication that indicates a first MBS interest configuration for the UE 102, where the first MBS interest configuration includes frequencies and MBS that the UE is interested in receiving. In some implementations and scenarios, the UE 102 transmits 302A the first MBS interest indication to the S-DU 174A, which in turn sends the first MBS interest indication to the CU 172. In some implementations, the UE 102 transmits 302A a PDCP PDU including the first MBS interest indication to the S-DU 174A. Because the S-DU 174A may not comprehend the first MBS interest indication or the PDCP PDU in its current format, the S-DU 174A forwards or sends the first MBS interest indication or the PDCP PDU to the CU 172. In other implementations and scenarios, the CU 172 receives 302A the first MBS interest indication from another base station or CU (e.g., base station 106B or CU 172 of base station 106B) directly (e.g., via an X2 or Xn interface) or via a CN (e.g., CN 110). For example, the CU 172 may receive 302A the first MBS interest indication from another base station, directly or via the CN, in a handover request message. In yet other implementations and scenarios, the CU 172 receives 302A the first MBS interest indication from the UE 102 via another DU.

Later in time (e.g., after the CU 172 detects that traffic of the UE 102 is inactive on the radio bearer(s) where the UE 102 and the CU 172 communicate data), the CU 172 determines to suspend a radio connection (e.g., including an RRC connection) with the UE 102. The CU 172 then sends 304A an *RRC suspension* message (e.g., an *RRCRelease* message or an *RRCConnectionRelease* message) to the S-DU 174A, which in turn transmits 306A the *RRC suspension* message to the UE 102. In response to the *RRC suspension* message, the UE 102 suspends 308A the radio connection, and can transition to an inactive state or an idle state (e.g., RRC_INACTIVE or RRC_IDLE). In some implementations, the CU 172 can send 304A a *UE Context Release Command* message including the *RRC suspension* message to the S-DU 174A, which in turn can send a *UE Context Release Complete* message to the CU 172 in response. The *RRC suspension* message can include a *SuspendConfig* IE, an *RRC-InactiveConfig-r15* IE, or a *ResumeIdentity-r13* IE.

Later in time, after suspending 308A the radio connection, the UE 102 can perform an RRC resume procedure 350A to transition from the inactive or idle state to the connected state (e.g., RRC_CONNECTED), e.g., in response to determining to initiate a data transmission with the base station 106A, or in response to a *Paging* message received from the base station 106A. In the RRC resume procedure 350A, the UE 102 transmits 310A an *RRC resume request* message to the T-DU 174B (e.g., on cell 126A operated by the T-DU 174B), which in turn sends 312A the *RRC resume request* message to the CU 172. After or in response to receiving the *RRC resume request* message, the CU 172 can send 314A a *UE Context Setup Request* message to the T-DU 174B to create a UE context for the UE 102 in the T-DU 174B. In response, the T-DU 174B sends 316A a *UE Context Setup Response* message to the CU 172. The T-DU 174B can include a T-DU configuration in the *UE Context Setup Response* message. In some implementations, the T-DU configuration includes at least one of physical configuration(s), medium access control (MAC) configuration(s), and radio link configuration(s). The T-DU configuration may omit a radio bearer configuration. For example, the T-DU configuration can be a *CellGroupConfig* IE, a *RadioResourceConfigDedicated* IE, an *RRCConnectionReconfiguration-r8-IEs* IE or an *RRCReconfiguration-IEs* IE conforming to 3GPP specification 38.331 or 36.331. In another example, the T-DU configuration can include configurations in a *CellGroupConfig* IE, a *RadioResourceConfigDedicated* IE, an *RRCConnectionReconfiguration-r8-IEs* IE or an *RRCReconfiguration-IEs* IE conforming to 3GPP specification 38.331 or 36.331.

After receiving the *UE Context Setup Response* message, the CU 172 sends 318A an *RRC resume* message including the T-DU configuration to the T-DU 174B in response to the *RRC resume request* message. The T-DU 174B in turn transmits 320A the *RRC resume* message to the UE 102. As a result, the UE 102 resumes 322A the suspended radio connection in response to the *RRC resume* message and transitions to the connected state. The UE 102 can transmit 324A an *RRC resume complete* message to the T-DU 174B, which in turn can send 326A the *RRC resume complete* message to the CU 172. Although the UE 102 is described as performing the RRC resume procedure 350A with the T-DU 174B, in other implementations, the UE 102 can perform an RRC resume procedure with S-DU 174A, similar to the RRC resume procedure 350A.

In some implementations, after receiving the RRC suspension message, the UE 102 can release 332A the first MBS interest configuration (e.g., in response to receiving 306A the *RRC suspension* message). Similarly, in some implementations, the CU 172 can release 331A the first MBS interest configuration in response to determining to suspend the radio connection with the S-DU 174A. In other implementations, the UE 102 can release 332A the first MBS interest configuration in response to initiating the RRC resume procedure 350A (e.g., transmitting 310A the *RRC resume request* message), during the RRC resume procedure 350A (e.g., in response to receiving 320A the *RRC resume* message), or after transmitting 324A the *RRC resume complete* message. Similarly, in some implementations, the CU 172 can release 331A the first MBS interest configuration during the RRC resume procedure 350A (e.g., in response to receiving 312A the *RRC resume request* message or transmitting 318A the *RRC resume* message), or after receiving 326A the *RRC resume complete* message.

In some scenarios and implementations, the UE 102 is no longer interested in receiving an MBS while the UE 102 stays in the inactive or idle state. Upon resuming the suspended radio connection, the UE 102 does not need to transmit to the CU 172 via the T-DU 174B a second MBS interest indication indicating that the UE is not interested in receiving an MBS. More particularly, by releasing the first MBS interest configuration at the UE 102 and the CU 172, the UE 102 and the CU 172 need not be limited to communicating with each other according to the first MBS interest indication upon resuming the suspended radio connection. The CU 172 does not send the first MBS interest indication to the T-DU 174B in the *UE Context Setup Request* message at event 314A, so that the T-DU 174B need not take the first MBS interest indication into account when generating the T-DU configuration. If the UE 102 is (interested in) receiving an MBS upon resuming the suspended radio connection, the UE 102 can transmit 344A the first MBS interest indication to the T-DU 174B, which in turn sends 346A the first MBS interest indication to the CU 172. Thus, the CU 172 can be aware of that the UE 102 is (interested in) receiving an MBS upon receiving the first MBS interest indication.

In some implementations, after receiving the first MBS interest indication, the CU 172 processes the first MBS interest indication in a format recognizable by a DU (e.g., the S-DU 174A or the T-DU 174B), by including the first MBS interest indication in a CU to DU interface message (which the CU 172 may transmit to a DU during event 302A (not shown for the sake of clarity)). Alternatively, after receiving the PDCP PDU including the first MBS interest indication at the CU 172, the CU 172 extracts the first MBS interest indication from the PDCP PDU and includes the first MBS interest indication in the CU to DU interface message. The CU 172 then sends the CU to DU interface message including the first MBS interest indication to the DU. In response, the DU can generate a DU configuration (e.g., S-DU configuration or a new T-DU configuration) for the UE 102 considering the first MBS interest indication. For example, the DU can generate the DU configuration for the UE 102 so that the UE 102 can simultaneously communicate with the DU and receive MBS from the DU. After generating the DU configuration, the DU can send a DU to CU interface message including the DU configuration to the CU 172 (not shown for the sake of clarity). The CU 172 can then send an *RRC reconfiguration* message including the DU configuration to the UE 102 via the DU 174A (not shown). The UE 102 can transmit an *RRC reconfiguration complete* message to the CU 172 via the DU (not shown). After applying the DU configuration, the UE 102 can simultaneously receive MBS and communicate with the DU for unicast data exchange. In some implementations, the DU configuration includes at least one of: physical configuration(s), medium access control (MAC) configuration(s), and radio link configuration(s). The S-DU configuration may omit a radio bearer configuration. For example, the DU configuration can be a *CellGroupConfig* IE, a *RadioResourceConfigDedicated* IE, an *RRCConnectionReconfiguration-r8-IEs* IE or an *RRCReconfiguration-IEs* IE conforming to the 3GPP specification 38.331 or 36.331. In another example, the DU configuration can include configurations in a *CellGroupConfig* IE, *a RadioResourceConfigDedicated* IE, an *RRCConnectionReconfiguration-r8-IEs* IE or an *RRCReconfiguration-IEs* IE conforming to the 3GPP specification 38.331 or 36.331.

In some implementations, the CU to DU interface message can be a *UE Context Modification Request* message and the DU to CU interface message can be a *UE Context Modification Response* message responding to the *UE Context Modification Request* message. In other implementations, the CU to DU interface message can be a *UE Context Modification Request* message and the DU to CU interface message can be a *UE Context Modification Required* message. In such implementations, the S-DU 174A can transmit a *UE Context Modification Response* message to the CU 172 in response to the *UE Context Modification Request* message, and the CU 172 can transmit a *UE Context Modification Confirm* message to the CU 172 in response to the *UE Context Modification Required* message.

If the S-DU 174A receives the first MBS interest indication from the CU 172, as described above, the S-DU 174A releases the first MBS interest configuration and the S-DU configuration in response to the *UE Context Release Command* message that the S-DU 174A receives at event 304A.

In some implementations, while the UE 102 is in inactive state or idle state, the UE 102 can retain one or more other configuration(s) such as the current security keys (e.g., K_{gNB} and K_{RRCint} keys), a Robust Header Compression (ROHC) state if ROHC is configured at the UE 102, QoS flow to DRB mapping rules, a Cell Radio Network Temporary Identifier (C-RNTI) used in a source PCell (e.g., PCell 125A), a cell identity (*cellIdentity*) and a physical cell identity of the source PCell, and other configuration parameters in a radio link control (RLC) configuration (e.g., *RLCBearerConfig* IE(s)), a medium access control (MAC) configuration (e.g., *MAC-CellGroupConfig* IE(s)) and/or a physical layer configuration (e.g., *PhysicalCellGroupConfig* IE(s)). In some implementations, the UE 102 can release configurations within *ReconfigurationWithSync* IE and/or *ServingCellConfigCommonSIB* IE in response to the *RRC suspension* message or during the RRC resume procedure 350A. The CU 172 can also retain one or more other configuration(s) similar to the other configuration(s) as retained by the UE 102. The CU 172 can include the other configurations in the *UE Context Setup Request* message. The T-DU 174B can generate the T-DU configuration including configuration parameters augmenting configuration parameters in the other configurations.

In the first MBS interest indication, the UE can indicate a set of frequencies (including one or more frequencies) that provides MBS that the UE is receiving or is interested in receiving, and can indicate a list of MBS that the UE is receiving or is interested in receiving on the indicated one or more frequencies. The set of frequencies and the list of MBS make up the MBS interest configuration. In some implementations, the UE 102 may receive MBS configuration(s) and/or MBS control information on a broadcast channel (BCCH) and/or a multicast control channel (MCCH) from a DU such as the S-DU 174A (e.g., on cell 125A operated by the S-DU 174A) or the T-DU 174B (e.g., on cell 126A). In some implementations, the CU 172 may generate the MBS configuration(s) and/or MBS control information and send the MBS configuration(s) and/or MBS control information to the DU. In other implementations, the DU may generate the MBS configuration(s) and/or MBS control information and send the MBS configuration(s) and/or MBS control information to the UE 102. In yet other implementations, the CU 172 may generate a first portion of the MBS configuration(s) and/or MBS control information and send the first portion of MBS configuration(s) and/or MBS control information to the DU. In turn, the DU may generate the remainder (*i.e.,* a second portion) of the MBS configuration(s) and/or MBS control information and send the second portion of the MBS configuration(s) and/or MBS control information to the UE 102. The DU can include the first and second portions of the MBS configuration(s) and/or MBS control information in the same SIB or in different SIBs, and/or in RRC message(s) which the DU can broadcast on the BCCH and/or MCCH on at least one cell (e.g., cell 125A or 126A) of the DU.

In some implementations, the S-DU 174A, the T-DU 174B or the CU 172 can indicate, in the MBS configuration(s) and/or MBS control information, that a UE (e.g., the UE 102) is allowed to transmit an MBS interest indication. The UE 102 transmits the first MBS interest indication if the UE 102 receives the indication that a UE (e.g., the UE 102) is allowed to transmit an MBS interest indication. If the S-DU 174A, the T-DU 174B or the CU 172 indicates, in the MBS configuration(s) and/or MBS control information, that a UE (e.g., the UE 102) is not allowed to transmit an MBS interest indication, the UE 102 does not transmit the first MBS interest indication.

In some implementations, the S-DU 174A, the T-DU 174B, or the CU 172 can indicate, in the MBS configuration(s) and/or MBS control information, at least one carrier frequency where MBS(s) can be broadcasted (*i.e.,* MBS carrier frequency). For example, the MBS configuration(s) and/or MBS control information may include frequency information (e.g., frequency band number(s) and/or absolute radio frequency channel number(s) (ARFCN(s))) identifying the at least one carrier frequency. From the frequency information, the UE 102 may determine at least one MBS carrier frequency on which the UE 102 is interested in receiving MBS data packets or is currently receiving MBS data packets. In response to the determination, the UE 102 can include frequency band number(s) and/or ARFCN(s) indicating the at least one determined carrier frequency in the first MBS interest indication.

In some implementations, the S-DU 174A, T-DU 174B, or the CU 172 can indicate, in the frequency information, an MBS DL BWP for a corresponding carrier frequency. For example, the frequency information can include MBS DL BWP configuration(s), each indicating an MBS DL BWP of a certain carrier frequency. Each of the MBS DL BWP configuration(s) can indicate bandwidth and/or location of an MBS DL BWP within a certain carrier frequency. Accordingly, from the frequency information, the UE 102 may identify the MBS DL BWP configuration(s) or MBS DL BWP(s) on which the UE 102 is interested in receiving or is currently receiving MBS data packets. In turn, the UE 102 can include, in the first MBS interest indication, MBS DL BWP information (e.g., the identified MBS DL BWP configuration(s) or MBS DL BWP(s)). From the first MBS interest indication, the S-DU 174A, the T-DU 174B, and/or the CU 172 thus can be aware of the MBS DL BWP(s) where the UE 102 is interested in receiving or is currently receiving MBS data packets.

In some implementations, the S-DU 174A, T-DU 174B, or the CU 172 can indicate, in the MBS configuration(s) and/or MBS control information, which particular MBS(s) (e.g., IPv4/IPv6 multicast delivery, IPTV, software delivery over wireless, group communications, IoT applications, V2X applications, emergency messages related to public safety) are broadcast for a carrier frequency indicated in the frequency information. For example, the MBS configuration(s) and/or MBS control information may include MBS session information identifying the particular MBS(s) broadcast on a carrier frequency in the frequency information. The MBS session information can include at least one MBS identity/identifier, service (QoS) flow identity/identifier, or temporary mobile group identity (TMGI). From the MBS session information, the UE 102 can identify the particular MBS(s) which the UE 102 is interested in receiving or is currently receiving. In response to the determination, the UE 102 can include at least one MBS identity/identifier, QoS flow identity/identifier, or TMGI indicating the identified MBS(s) in the first MBS interest indication.

In some implementations, the S-DU 174, the T-DU 174B, or the CU 172 can indicate, in the MBS session information, which particular MBS(s) are broadcast on MBS DL BWP(s) of a carrier frequency indicated in the frequency information. For example, the S-DU 174A, the T-DU 174B, or the CU 172 can indicate, in the MBS session information, a first set of MBS(s) are broadcast on a first MBS DL BWP of a carrier frequency and a second set of MBS(s) are broadcast on a second MBS DL BWP of the carrier frequency indicated in the frequency information. In the first MBS interest indication, the UE 102 can include MBS DL BWP information (e.g., at least one MBS DL BWP identity or MBS DL BWP configuration) indicating MBS DL BWP(s) (e.g., the first or second MBS DL BWP, or both) where the UE 102 is interested in receiving or is currently receiving the first and/or second sets of MBS(s). From the first MBS interest indication, the S-DU 174A, the T-DU 174B, and/or the CU 172 thus can be aware of the MBS DL BWP(s) where the UE 102 is interested in receiving or is currently receiving the first and/or second sets of MBS(s).

In some implementations the CU to DU interface message can be a *UE Context Modification Request* message and the DU to CU interface message can be a *UE Context Modification Response* message responding to the *UE Context Modification Request* message. In other implementations, the CU to DU interface message can be a *UE Context Modification Request* message and the DU to CU interface message can be a *UE Context Modification Required* message. In such implementations, the S-DU 174A can transmit a *UE Context Modification Response* message to the CU 172 in response to the *UE Context Modification Request* message, and the CU 172 can transmit a *UE Context Modification Confirm* message to the CU 172 in response to the *UE Context Modification Required* message.

In some implementations, the first MBS interest indication can be a new RRC message (e.g., an *MBSInterestIndication* or *MBMSInterestIndication* message) defined in 3GPP specification 36.331 or 38.331. In other implementations, the CU 172 can obtain an RRC message including the first MBS interest. The RRC message can be an existing RRC message defined in 3GPP specification 36.331 or 38.331 or a new RRC message.

In some scenarios and implementations, the UE 102 can perform an RRC resume procedure similar to the RRC resume procedure 350A with the S-DU 174A. In this case, the UE 102 transmits the first MBS interest indication to the CU 172 via the S-DU 174A, similar to the events 344A and 346A.

Now referring to Fig. 3B, whereas the UE 102 and the CU 172 of Fig. 3A release the first MBS interest configuration, the UE 102 and the CU 172 of Fig. 3B retain the first MBS interest configuration. Otherwise, any of the implementations described above in reference to Fig. 3A can be applied to scenario 300B of Fig. 3B.

Similar to the scenario 300A, in scenario 300B, the UE 102 initially operates in a connected state, and thus communications 302B with the CU 172 via the S-DU 174A. The CU 172 receives 302B a first MBS interest indication that indicates a first MBS interest configuration for the UE 102 (e.g., from the UE 102 via the S-DU 174A or from another base station, CU, or DU). In response to determining to suspend a radio connection with the UE 102, the CU 172 sends 304B an *RRC suspension* message to the S-DU 174A, which in turn transmits 306B the *RRC suspension* message to the UE 102. In response to the *RRC suspension* message, the UE 102 suspends 308B the radio connection. At a later time, the UE 102 can perform an RRC resume procedure 350B, similar to the RRC resume procedure 350A, with the T-DU 174B.

In contrast to the scenario 300A, in the scenario 300B, the UE 102 retains 334B the first MBS interest configuration before and during an RRC resume procedure 350B. Similarly, the CU 172 also retains 333B the first MBS interest configuration before and during the RRC resume procedure 350B.

Given that the CU 172 retains 333B the first MBS interest configuration during (and throughout) the RRC resume procedure 350B, the CU 172 can forward the first MBS interest indication to the T-DU 174B during the RRC resume procedure 350B. For example, the CU 172 can transit a CU to DU interface message including the first MBS interest indication to the T-DU 174B. The T-DU 174B can generate a DU configuration that takes into account the first MBS interest indication, and transmit the DU configuration to the CU 172 in a DU to CU interface message.

In some implementations, after the RRC resume procedure 350B with the T-DU 174B, the UE 102 determines 342B to update the first MBS interest configuration. For example, the UE 102 can determine that the UE 102 is no longer interested in receiving MBS, or that the UE 102 is interested in receiving different MBS than indicated by the first MBS interest indication. Additionally or alternatively, the UE 102 may determine that the set of frequencies on which the UE is interested in receiving MBS services has changed compared to the frequencies indicated in the first MBS interest indication. Accordingly, the UE 102 can transmit 343B a second MBS interest indication to the T-DU 174B indicating the frequencies and/or list of MBS that the UE 102 is interested in receiving (i.e., indicating a second MBS interest configuration). The T-DU 174B can forward 345B the second MBS interest indication to the CU 172, which can update 348B the first MBS interest configuration to the second MBS interest configuration. In other words, the CU 172 overrides the first MBS interest configuration with the new second MBS interest configuration. The CU 172 can include the second MBS interest indication in a CU to DU interface message and send the CU to DU interface message including the second MBS interest indication to the T-DU 174B, as described for Fig. 3A with reference to the first MBS interest indication.

Turning to Fig. 4A, a scenario 400A is generally similar to the scenario 300A, except that the UE 102 performs an RRC resume procedure with a target base station rather than a target DU. More particularly, initially, the UE 102 communicates 402A with a source base station (S-BS) 106A. The S-BS 106A may be a distributed base station including a CU and a DU. The S-BS 106A obtains 402A a first MBS interest indication that indicates a first MBS interest configuration for the UE 102 (e.g., from the UE 102 or from another base station). In response to determining to suspend a radio connection with the UE 102, the S-BS 106A sends 404B an *RRC suspension* message to the UE 102. In response to the *RRC suspension* message, the UE 102 suspends 408B the radio connection and can transition to an inactive or an idle state.

At a later time, the UE 102 can perform an RRC resume procedure 450A with a target base station (T-BS) 104, which may include a T-DU 174 and a T-CU 172, to transition to a connected state. The UE 102 can transmit 410A an *RRC resume request* message to the T-DU 174, which in turn transmits 412A the *RRC resume request* message to the T-CU 172. After or in response to the *RRC resume request,* the T-CU 172 initiates a Retrieve UE Context procedure and transmits 462A a *Retrieve UE Context Request* message to the S-BS 106A. The S-BS 106A transmits 464A to the T-CU 172 a *Retrieve UE Context Response* including the first MBS interest indication and any other configurations for the UE 102, such as the one or more other configuration(s) discussed above with reference to Fig. 3A. In the scenario 400A, the S-BS 106A retains the first MBS interest configuration at least until the S-BS 106A transmits 464A the first MBS interest indication to the T-CU 172. After transmitting 464A the first MBS interest indication to the T-CU 172, the S-BS 106A may release the MBS interest configuration.

After receiving 464A the *Retrieve UE Context Response* message, the T-CU 172 can send 414A a *UE Context Setup Request* message to the T-DU 174 to create a UE context for the UE 102 in the T-DU 174. In response, the T-DU 174 sends 416A a *UE Context Setup Response* message to the T-CU 172. The T-DU 174 can include a T-DU configuration in the *UE Context Setup Response* message, which may be similar to the T-DU configuration discussed above with reference to 316A. After receiving 416A the *UE Context Setup Response* message, the T-CU 172 sends 418A an *RRC resume* message including the T-DU configuration to the T-DU 174, which in turn transmits 420A the *RRC resume* message to the UE 102. As a result, the UE 102 resumes 422A the suspended radio connection and transitions to the connected state. The UE 102 can transmit 424A an *RRC resume complete* message to the T-DU 174, which in turn can send 426A the *RRC resume complete* message to the T-CU 172. Further, similar to Fig. 3A, although the UE 102 is described as performing the RRC resume procedure 450A with the T-BS 104, in other implementations, the UE 102 can perform an RRC resume procedure with the S-BS 106A.

In some implementations, after receiving the RRC suspension message, the UE 102 can release 432A the first MBS interest configuration in response to determining to suspend the radio connection with the S-BS 106A (e.g., in response to receiving 404A the *RRC suspension* message). Similarly, in some implementations, the T-CU 172 can release 435A the first MBS interest configuration after receiving 464A the first MBS interest indication. In other implementations, the UE 102 can release 432A the first MBS interest configuration in response to initiating the RRC resume procedure 450A (e.g., transmitting 410A the *RRC resume request* message), during the RRC resume procedure 450A (e.g., in response to receiving 420A the *RRC resume* message), or after transmitting 424A the *RRC resume complete* message. Similarly, in some implementations, the T-CU 172 can release 435A the first MBS interest configuration during the RRC resume procedure 450A (e.g. in response to having received 412A the *RRC resume request* message or transmitting 418A the *RRC resume* message), or after receiving 426A the *RRC resume complete* message.

As in the scenario 300A, if the UE 102 is no longer interested in receiving an MBS after resuming the suspended radio connection, the UE 102 does not need to transmit to the T-CU 172 via the T-DU 174 a second MBS interest indication indicating that the UE is not interested in receiving an MBS. Because the UE 102 and the T-CU 172 release (at event 432A and 435A, respectively) the first MBS interest configuration, the UE 102 and the T-CU 172 need not be limited to communicating with each other according to the first MBS interest indication upon resuming the suspended connection. The T-CU 172 does not send the first MBS interest indication to the T-DU 174 in the *UE Context Setup Request* message at event 414A, so that the T-DU 174 need not take the first MBS interest indication into account when generating the T-DU configuration. If the UE 102 is (interested in) receiving an MBS upon resuming the suspended radio connection, the UE 102 can transmit 444A the first MBS interest indication to the T-DU 174, which in turn sends 446A the first MBS interest indication to the T-CU 172.

Now referring to Fig. 4B, whereas the UE 102 and the T-CU 172 of Fig. 4A release the first MBS interest configuration, the UE 102 and the T-CU 172 of Fig. 4B retain the first MBS interest configuration. Otherwise, any of the implementations discussed above in reference to Fig. 4A, and in reference to Figs. 3A-3B, can be applied to scenario 400B of Fig. 4B.

The UE 102 initially operates in a connected state and communicates 402B with the S-BS 106A, similar to event 402A. The S-BS 106A receives 402B a first MBS interest indication that indicates an MBS interest configuration for the UE 102 (e.g., from the UE 102 or from another base station or CU). In response to determining to suspend a radio connection with the UE 102, the S-BS 106A sends 404B an *RRC suspension* message to the UE 102, and the UE 102 suspends 408B the radio connection in response to the *RRC suspension* message.

In contrast to the scenario 400A, the UE 102 retains 434B the first MBS interest configuration before and during an RRC resume procedure 450B. Similarly, the S-BS 106A retains 433A the first MBS interest configuration (at least until transmitting 464B the first MBS interest indication to the T-BS 104), and the T-BS 104 retains the first MBS interest configuration during the RRC resume procedure 450B.

More particularly, the UE 102 retains 434B the first MBS interest configuration 434B after suspending 408B the radio connection with the S-BS 106A. The UE 102 initiates the RRC procedure 450B, in which events 410B, 412B, 462B, and 464B are similar to events 410A, 412A, 462A, and 464B, respectively. However, after the T-CU 172 receives 464B the first MBS interest indication, the T-CU 172 retains the first MBS interest configuration.

The T-CU 172 transmits 414B a *UE Context Setup Request* message to the T-DU 174. Because the T-CU 172 retains the first MBS interest configuration, the T-CU 172 can include the first MBS interest indication in the *UE Context Setup Request* message, and the T-DU 174 can generate a T-DU configuration for the UE 102 considering the first MBS interest indication. The T-DU 174 transmits 416B a *UE Context Setup Response* message including the T-DU configuration to the T-CU 172. The T-CU 172 can then transmit 418B an *RRC resume* message including the T-DU configuration to the T-DU 174, which in turn sends 420B the *RRC resume* message to the UE 102. In response to receiving 420B the *RRC resume* message, the UE 102 resumes 422B the suspended radio connection and transmits 424 an *RRC resume complete* message to the T-DU 174, which in turn transmits the *RRC resume complete* message to the T-CU 172.

In some implementations, after the RRC resume procedure 450B with the T-BS 104, the UE 102 determines 442B to update the first MBS interest configuration, similar to event 342B. Accordingly, the UE 102 can transmit 443B a second MBS interest indication to the T-DU 174 indicating the updated frequencies and/or list of MBS that the UE 102 is interested in receiving (i.e., a second MBS interest configuration). The T-DU 174 can forward 445B the second MBS interest indication to the T-CU 172, which can update 448B the first MBS interest configuration to the second MBS interest configuration.

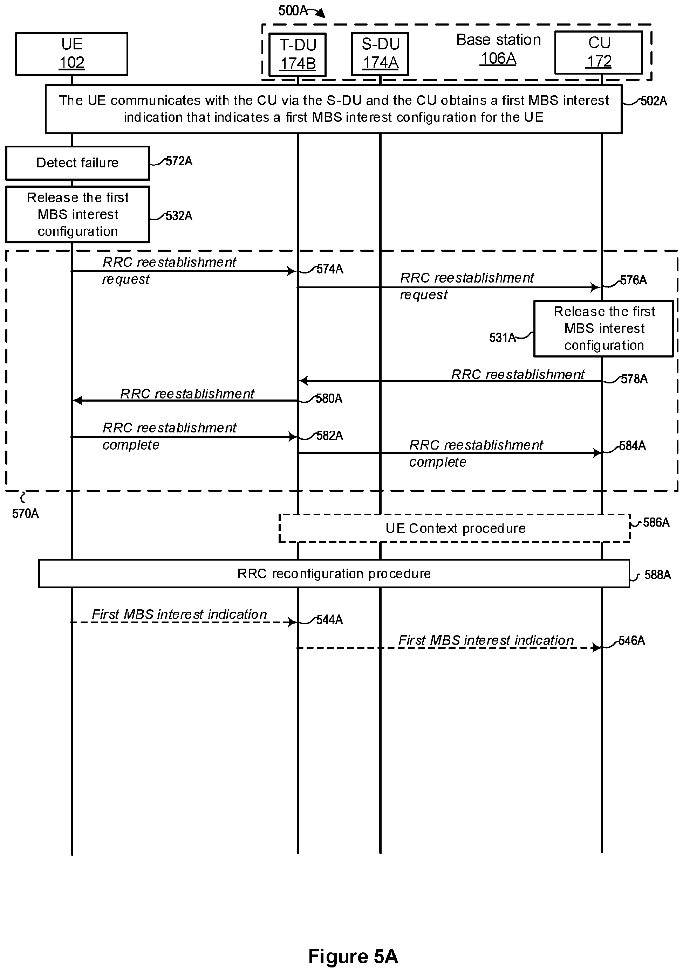

Referring now to Fig. 5A, a scenario 500A is generally similar to the scenario 300A, except that the UE 102 releases a first MBS interest configuration after the UE 102 detects a failure on a radio connection with a base station, rather than in response to an *RRC suspension* message. Otherwise, any of the implementations described above in reference to Figs. 3A-3B and 4A-4B can be applied to the scenario 500A of Fig. 5A.

In the scenario 500A, a base station 106A includes a DU 174A, a DU 174B, and a CU 172. Similar to event 302A, initially the UE 102 communicates 502A with the CU 172 via an S-DU 174A. Further, the UE 102 may be in SC with the base station 106A, or may be in DC with the base station 106A and a base station 104 (not shown in Fig. 5A), where the base station 106A can operate as an MN. Moreover, while Fig. 5A depicts the base station 106A as including the S-DU 174A and a T-DU 174B, in some scenarios, the base station 106A may include just one DU, and/or the S-DU and the T-DU may be the same DU (e.g., a DU 174).

In any event, the CU 172 obtains 502A a first MBS interest indication that indicates a first MBS interest configuration for the UE 102 (e.g., from the UE 102 or from another base station, CU, or DU). At a later time, the UE 102 detects 572A a failure on the radio connection with the S-DU 174A. For example, the UE 102 may detect a radio link failure, handover failure, a reconfiguration failure, or other failure that causes the UE 102 to initiate an RRC reestablishment procedure. In response to detecting 572A the failure, the UE 102 releases 532A the first MBS interest configuration.

In response to detecting 572A the failure, the UE 102 can also perform an RRC reestablishment procedure 570A to recover the failure. To initiate the RRC reestablishment procedure 570A, the UE 102 transmits 574A an *RRC reestablishment request* message 574A to the T-DU 174B, which in turn transmits 576A the *RRC reestablishment request* message to the CU 172. The UE 102 can indicate in the *RRC reestablishment request* message that the UE 102 detected a failure, and may also indicate in the *RRC reestablishment request* message a cause of the failure. After receiving 576A the *RRC reestablishment request* message, the CU 172 releases 531A the first MBS interest configuration.

To continue the RRC reestablishment procedure 570A, the CU 172 transmits 578A an *RRC reestablishment* message to the T-DU 174B in response to the *RRC reestablishment request* message, and the T-DU 174B sends 580A the *RRC reestablishment* message to the UE 102. In response, the UE 102 can transmit 582A an *RRC reestablishment complete* message to the T-DU 174B, which in turn transmits 584A the *RRC reestablishment complete* message to the CU 172.

After receiving 576A the *RRC reestablishment request* message, the CU 172 can perform 586A a UE Context procedure with the T-DU 174B to obtain a T-DU configuration from the T-DU 174B. The CU 172 then performs 588A an RRC reconfiguration procedure with the UE 102 via the T-DU 174B to send the T-DU configuration to the UE 102. To perform the RRC reconfiguration procedure, the CU 172 sends an *RRC reconfiguration* message including the T-DU configuration to the T-DU 174B, which in turn transmits the *RRC reconfiguration* message to the UE 102. In response, the UE 102 transmits an *RRC reconfiguration complete* message to the T-DU 174B, which in turn sends the *RRC reconfiguration complete* message to the CU 172.

In one implementation, the CU 172 transmits separate CU to DU messages (e.g., *DL RRC Message Transfer* messages) which include the *RRC reestablishment* message and the *RRC reconfiguration* message, respectively. In another implementation, the CU 172 transmits a CU to DU message (e.g., a *DL RRC Message Transfer* message) including both the RRC reestablishment message and the RRC reconfiguration message to the T-DU 174B. In these implementations, the T-DU 174B transmits a first DL MAC PDU including the *RRC reestablishment* message to the UE 102 and then transmits a second DL MAC PDU including the *RRC reconfiguration* message to the UE 102. Alternatively, the T-DU 174B can transmit to the UE 102 a DL MAC PDU including the *RRC reestablishment* message and the *RRC reconfiguration* message. More particularly, the T-DU 174B can generate a first MAC sub PDU including a first logical channel identity and the *RRC reestablishment* message, and generate a second MAC sub PDU including a second logical channel identity and the *RRC reconfiguration* message. To ease processing of the DL MAC PDU in the UE 102, the T-DU 174B can place the first MAC sub PDU left of the second MAC sub PDU in the DL MAC PDU. In some implementations, the UE 102 can transmit a first UL MAC PDU including the *RRC reestablishment complete* message to the T-DU 174B, and then transmit a second UL MAC PDU including the *RRC reconfiguration complete* message to the T-DU 174B in response to the *RRC reestablishment* message. Alternatively, the UE 102 transmits to the T-DU 174B a UL MAC PDU including the *RRC reestablishment* message and the *RRC reconfiguration* message. More particularly, the UE 102 can generate a first MAC sub PDU including the second logical channel identity and the *RRC reestablishment complete* message, and generate a second MAC sub PDU including the second logical channel identity and the *RRC reconfiguration complete* message. To ease processing of the UL MAC PDU in the T-DU 174B, the UE 102 can place the first MAC sub PDU left of the second MAC sub PDU in the UL MAC PDU.

Depending on the implementation, the UE Context procedure can be a UE Context Setup procedure or a UE Context Modification procedure. In a UE Context Setup procedure, the CU 172 sends a *UE Context Setup Request* message to the T-DU 174B to perform the UE Context Setup procedure, and the T-DU 174B sends a *UE Context Setup Response* message including the T-DU configuration in response. In a UE Context Modification procedure, the CU 172 sends a *UE Context Modification Request* message to the T-DU 174B to perform the UE Context Modification procedure, and the T-DU 174B sends a *UE Context Modification Response* message including the T-DU configuration in response.

In some implementations, the CU 172 can perform the UE Context procedure before or after transmitting 578A the *RRC reestablishment* message, or before or after receiving 584A the *RRC reestablishment complete* message 584A. Further, although the UE 102 is described as performing the RRC reestablishment procedure 570A with the T-DU 174B, in other implementations, the UE 102 can perform an RRC reestablishment procedure with the S-DU 174A. In such implementations, the CU 172 performs the RRC reconfiguration procedure with the S-DU 174A, and may or may not perform the UE Context procedure with the S-DU 174A.

After the UE 102 recovers the failure, the UE 102 may send 544A the first MBS interest indication to the T-DU 174B if the UE 102 is (interested in) receiving an MBS upon reestablishing the radio connection with the T-DU 174B. The T-DU 174B then sends 546A the first MBS interest indication to the CU 172. If the UE 102 is no longer interested in receiving an MBS upon reestablishing the radio connection, the UE 102 does not need to transmit an MBS interest indication to the T-DU 174B. Because the CU 172 released 531A the first MBS interest configuration and did not transmit the first MBS interest indication to the T-DU 174B, the T-DU 174B did not take the first MBS interest indication into account when generating the T-DU configuration, as discussed above with reference to Fig. 3A and events 344A-346A.

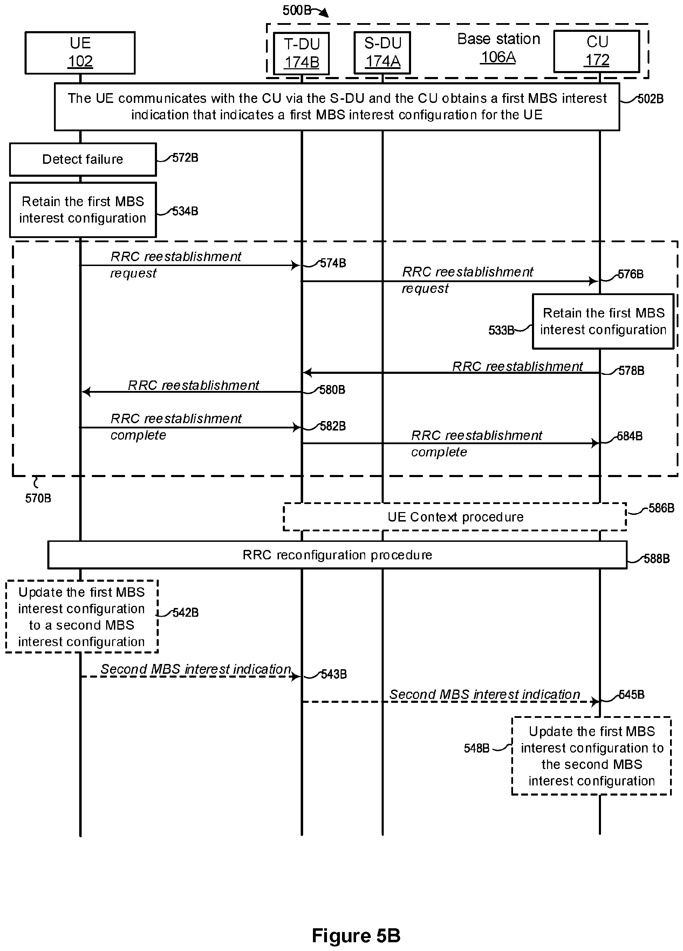

Turning to Fig. 5B, a scenario 500B is generally similar to the scenario 500A, except that the UE 102 and the CU 172 retain rather than release the first MBS interest configuration. Otherwise, any of the implementations described above in reference to Figs. 3A-3B, 4A-4B, and 5A can be applied to the scenario 500B of Fig. 5B.

Events 502B and 572B are similar to the events 502A and 572A, respectively. However, instead of releasing the first MBS interest configuration, the UE 102 retains 534B the first MBS interest configuration after detecting 572B the failure. Similarly, after the CU 172 receives 576B the *RRC reestablishment request* message, the CU 172 retains 533B the first MBS interest configuration. Other events of RRC reestablishment procedure 570B, such as events 574B, 576B, 578B, 580B, 582B, and 584B are similar to the events 547A, 576A, 578A, 580A, 582A, and 584A, respectively.

During a UE Context procedure 586B, because the CU 172 retains 533B the first MBS interest configuration, the CU 172 can forward the first MBS interest indication to the T-DU 174B (e.g., in a *UE Context Setup Request* or a *UE Context Modification Request,* similar to event 414B) and the T-DU 174B can generate a T-DU configuration taking into account the first MBS interest indication. After the CU 172 performs the UE Context procedure 586B with the T-DU 174B, the CU 172 performs 588B an RRC reconfiguration procedure with the UE 102 via the T-DU 174B to send the T-DU configuration to the UE 102, similar to event 588A. As described above with reference to Fig. 5A, although the UE 102 is described as performing the RRC reestablishment procedure 570B with the T-DU 174B, in other implementations, the UE 102 can perform an RRC reestablishment procedure with the S-DU 174A. In such implementations, the CU 172 performs the RRC reconfiguration procedure with the S-DU 174A, and may or may not perform the UE Context procedure with the S-DU 174A.

In some implementations, after the RRC reconfiguration procedure 588B, the UE 102 determines 542B to update the first MBS interest configuration, similar to events 342B and 442B. Accordingly, the UE 102 can transmit 543B a second MBS interest indication to the T-DU 174B indicating the updated frequencies and/or list of MBS that the UE 102 is interested in receiving (i.e., a second MBS interest configuration). The T-DU 174B can forward 545B the second MBS interest indication to the CU 172, which can update 548B the first MBS interest configuration to the second MBS interest configuration.

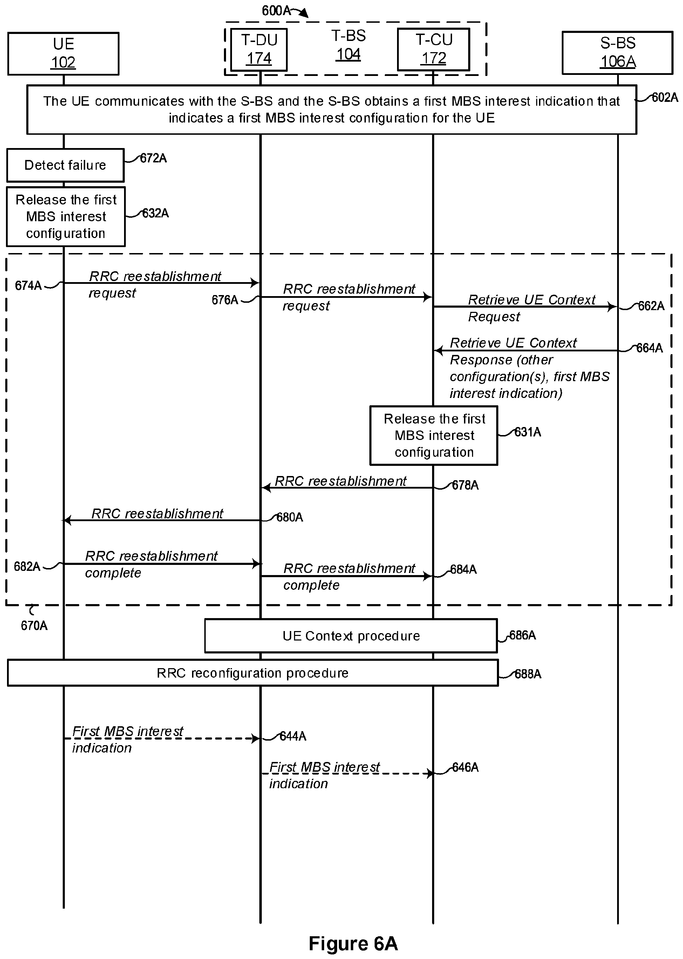

Turning to Fig. 6A, a scenario 600A is generally similar to the scenario 400A, except that the UE 102 releases a first MBS interest configuration after the UE 102 detects a failure on a radio connection with a base station, rather than in response to an *RRC suspension* message. Otherwise, any of the implementations described above in reference to Figs. 3A-3B, 4A-4B, and 5A-5B can be applied to the scenario 600A of Fig. 6A.

In the scenario 600A, initially, the UE 102 communicates 602A with an S-BS 106A. The S-BS 106A may be a distributed base station including a CU and a DU. The S-BS 106A obtains 602A a first MBS interest indication that indicates a first MBS interest configuration for the UE 102 (e.g., from the UE 102 or from another base station).

In response to detecting 672A a failure on a radio connection with the S-BS 106A (similar to the event 572A), the UE 102 releases 632A the first MBS interest configuration. To recover the failure, the UE 102 performs 670A an RRC reestablishment procedure with the T-BS 104, which includes a T-CU 172 and a T-DU 174. The UE 102 transmits 674A an *RRC reestablishment request* message to the T-DU 174, which in turn transmits 676A the *RRC reestablishment request* message to the T-CU 172. After or in response to the *RRC reestablishment request* message, the T-CU 172 initiates a Retrieve UE Context procedure and transmits 662A a *Retrieve UE Context Request* message to the S-BS 106A. In response, the S-BS 106A transmits 664A to the T-CU 172 a *Retrieve UE Context Response* including the first MBS interest indication and any other configurations for the UE 102, such as the one or more other configuration(s) discussed above with reference to Fig. 3A. In the scenario 600A, the S-BS 106A retains the first MBS interest configuration at least until the S-BS 106A at least until the S-BS 106A transmits 664A the first MBS interest indication to the T-CU 172. After receiving 664A the *Retrieve UE Context Response* message, the T-CU 172 releases 631A the first MBS interest configuration.

To continue the RRC reestablishment procedure 670A, the T-CU 172 transmits 678A an *RRC reestablishment* message to the T-DU 174B in response to the *RRC reestablishment request* message, and the T-DU 174 sends 680A the *RRC reestablishment* message to the UE 102. In response, the UE 102 can transmit 682 an *RRC reestablishment complete* message to the T-DU 174, which in turn transmits 684A the *RRC reestablishment complete* message to the T-CU 172.

After receiving 676A the *RRC reestablishment request* message, the T-CU 172 can perform 686A a UE Context procedure with the T-DU 174 to obtain a T-DU configuration from the T-DU 174, similar to the UE Context procedure 586A. The CU 172 then can perform 688A an RRC reconfiguration procedure with the UE 102 via the T-DU 174 to send the T-DU configuration to the UE 102, similar to the RRC reconfiguration procedure 588A. Although the UE 102 is described as performing the RRC reestablishment procedure 670A with the T-DU 174 and the T-BS 106A, in other implementations, the UE 102 can perform an RRC reestablishment procedure with the S-BS 104. In such implementations, the S-BS 104 may or may not need to perform a UE Context procedure or an RRC reconfiguration procedure with the UE 102.

After the UE 102 recovers the failure, the UE 102 may send 644A the first MBS interest indication to the T-DU 174 if the UE 102 is (interested in) receiving an MBS upon reestablishing the radio connection with the T-DU 174. The T-DU 174 then sends 646A the first MBS interest indication to the CU 172. If the UE 102 is no longer interested in receiving an MBS upon reestablishing the radio connection, the UE 102 does not need to transmit an MBS interest indication to the T-DU 174 because the CU 172 released 631A the first MBS interest configuration.

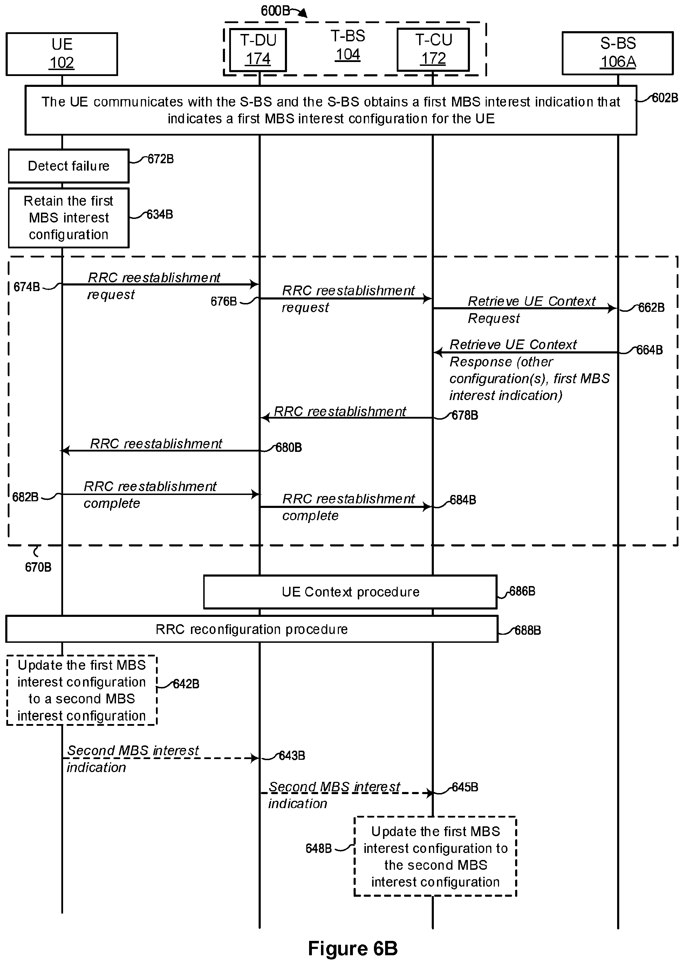

Turning to Fig. 6B, a scenario 600B is generally similar to the scenario 600A, except that the UE 102 and the T-CU 172 retain instead of release the first MBS interest configuration. The scenario 600B is also generally similar to the scenario 400B, except that the UE 102 retains a first MBS interest configuration after the UE 102 detects a failure on a radio connection with a base station, rather than in response to an *RRC suspension* message. Otherwise, any of the implementations described above in reference to Figs. 3A-3B, 4A-4B, 5A-5B, and 6B can be applied to the scenario 600B of Fig. 6B.

Initially, the UE 102 communicates 602B with the S-BS 106A and the S-BS 106A obtains a first MBS interest indication that indicates a first MBS interest configuration for the UE 102. At a later time, in response to detecting 672B a failure on a radio connection with the S-BS 106A (similar to the event 572A), the UE 102 retains 634B the first MBS interest configuration.

To recover the failure, the UE 102 performs 670B an RRC reestablishment procedure with the T-BS 104. Events 674B, 676B, 678B, 680B, 682B, and 684B of the RRC reestablishment procedure 670B are similar to the events 646A, 676A, 678A, 680A, 682A, and 684A, respectively, of the RRC reestablishment procedure 670A. Further, events 662B and 664B of the Retrieve UE Context procedure during the RRC reestablishment procedure 670A are also similar to the events 662A and 664A. In contrast to Fig. 6A, after receiving 664B the first MBS interest indication, the T-CU 172 retains the first MBS interest configuration.

The T-CU 172 can perform 686B a UE Context procedure with the T-DU 174 to obtain a T-DU configuration from the T-DU 174, similar to the UE Context procedure 586B. During the UE Context procedure 686B, the T-CU 172 can provide the first MBS interest indication to the T-DU 174, and the T-DU 174 can generate the T-DU configuration taking into consideration the first MBS interest indication. The CU 172 then can perform 688A an RRC reconfiguration procedure with the UE 102 via the T-DU 174 to send the T-DU configuration to the UE 102, similar to the RRC reconfiguration procedure 588B. Although the UE 102 is described as performing the RRC reestablishment procedure 670B with the T-DU 174 and the T-BS 106A, in other implementations, the UE 102 can perform an RRC reestablishment procedure with the S-BS 104. In such implementations, the S-BS 104 may or may not need to perform a UE Context procedure or an RRC reconfiguration procedure with the UE 102.

In some implementations, after recovering the failure, the UE 102 determines 642B to update the first MBS interest configuration, similar to events 342B and 442B. Accordingly, the UE 102 can transmit 643B a second MBS interest indication to the T-DU 174 indicating the updated frequencies and/or list of MBS that the UE 102 is interested in receiving (i.e., a second MBS interest configuration). The T-DU 174 can forward 645B the second MBS interest indication to the CU 172, which can update 648B the first MBS interest configuration to the second MBS interest configuration.

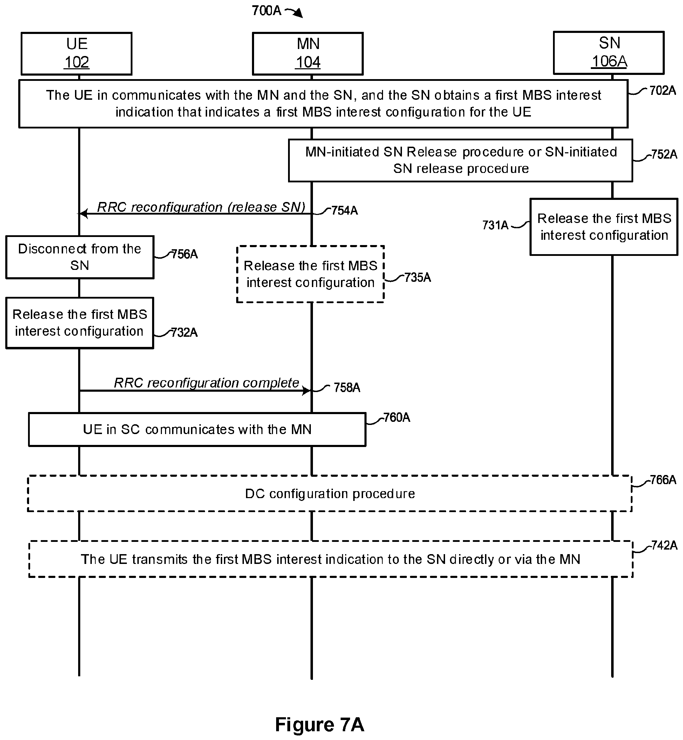

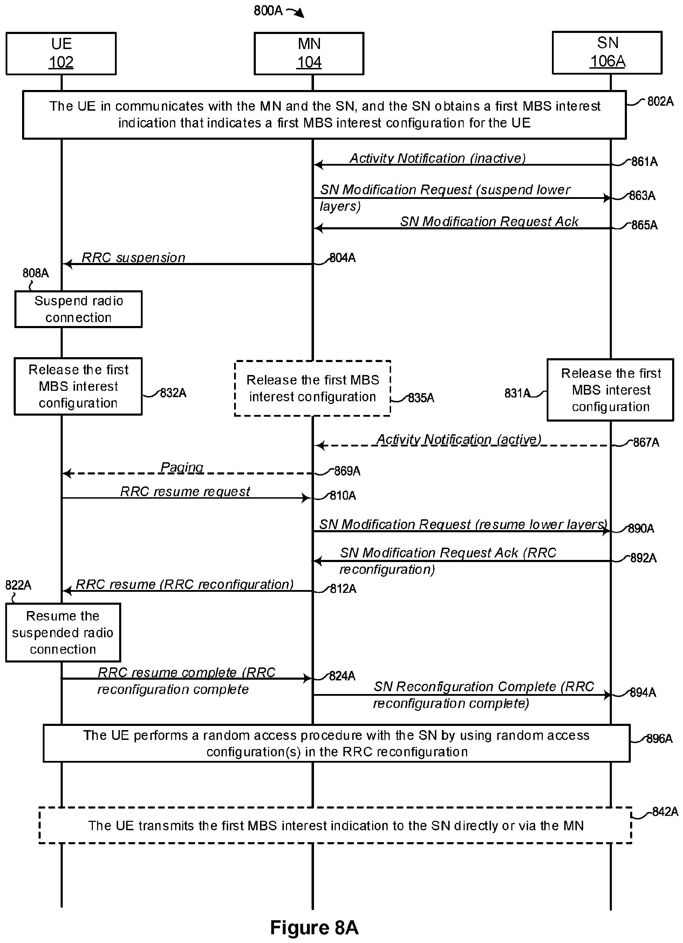

Referring next to Figs. 7A-7B and 8A-8B, the UE 102 and base stations of the RAN 105 (e.g., the base stations 104 and 106A) can implement techniques for managing MBS interest indications in scenarios in which the UE 102 initially operates in DC with an MN and an SN.

Turning to Fig. 7A, the base station 104 operates as an MN and the base station 106A operates as an SN. The UE 102 operates in DC and communicates 702A with the MN 104 and the SN 106A. The SN 106A obtains 702A a first MBS interest indication that indicates a first MBS interest configuration for the UE 102 (e.g., directly from the UE 102, from the MN 104, or from another base station). In some implementations, the MN 104 may release the first MBS interest indication after sending the first MBS interest indication to the SN 106A. In other implementations, the MN 104 may retain the first MBS interest indication after sending the first MBS interest indication to the SN 106A.

At a later time, the MN 104 and the SN 106A can perform 752A an MN-initiated or SN-initiated SN release procedure to release the SN 106A for the UE 102 (i.e., configure the UE 102 to be in SC). For example, in an MN-initiated SN release procedure, the MN 104 sends an *SN Release Request* message to the SN 106A, which in turn sends an *SN Release Request Acknowledge* message to the MN 104. Alternatively, in an SN-initiated SN release procedure, the SN 106A sends an *SN Release Required* message to the MN 104, which in turn sends an *SN Release Confirm* message to the SN 106A. After either the MN- or SN-initiated release procedure, the MN 104 sends 754A an *RRC reconfiguration* message to the UE 102 that indicates to release the SN 106A. In response to receiving 754A the *RRC reconfiguration* message, the UE 102 disconnects 756A from the SN 106A.

In response to disconnecting 756A from the SN 106A, the UE 102 releases 732A the first MBS interest configuration. Similarly, in response to the MN- or SN-initiated release procedure 752A, the SN 106A releases the first MBS interest configuration. If the MN 104 previously obtained the first MBS interest configuration (e.g., in implementations where the SN 106A receives the first MBS interest indication from the MN 104), then the MN 104 also releases 735A the MBS interest configuration in response to the MN- or SN-initiated release procedure 752A.

After disconnecting 756A from the MN 104, the UE 102 transmits 758A an *RRC reconfiguration complete* message to the MN 104. The UE 102 can then communicate 760A in SC with the MN 104. In some implementations, the UE 102 can later resume DC with the MN 104 and the SN 106A by performing 766A a DC configuration procedure with the MN 104 and the SN 106A.

Further, similar to events 344A-346A, 444A-446A, 544A-546A, and 644A-646A, if the UE 102 determines that the UE 102 is (interested in) receiving an MBS after resuming DC, the UE 102 can transmit 742A the first MBS interest indication to the SN 106A. The UE 102 can transmit 742A the first MBS interest indication directly to the SN 106A, or to the SN 106A via the MN 104.

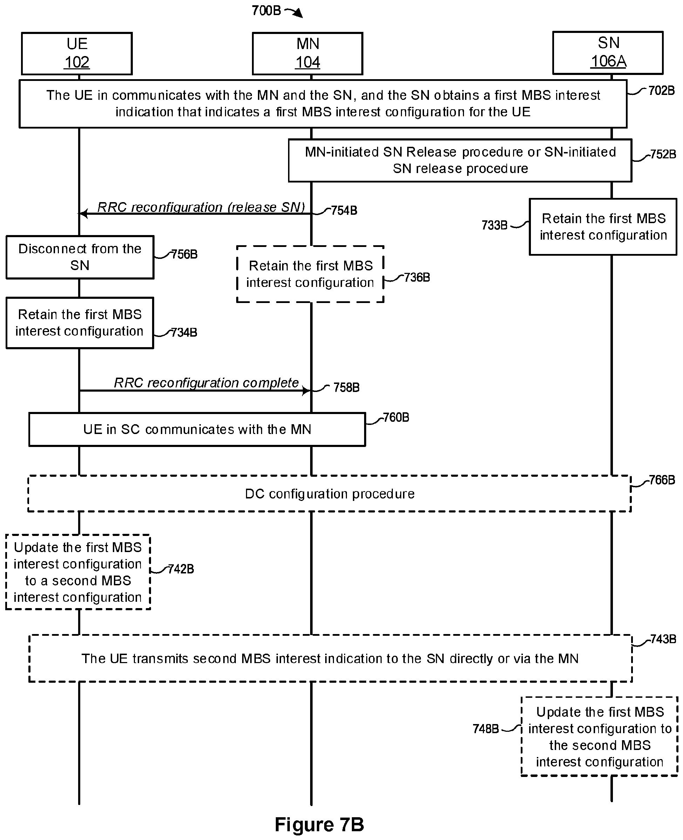

Turning to Fig. 7B, a scenario 700B is generally similar to the scenario 700A, except that the UE 102 and the SN 106A retain rather than release the first MBS interest configuration following an SN release procedure.

Accordingly, events 702B, 752B, 754B, and 757B may be similar to events 702A, 752A, 754A, and 756A. In contrast to the scenario 700A, after disconnecting 756B from the SN 106A, the UE 102 retains 734B the first MBS interest configuration. Similarly, the SN 106A retains 733B the first MBS interest configuration after the MN- or SN-initiated release procedure. If the MN 104 previously received the first MBS interest indication, then the MN 104 also retains 736B the first MBS interest configuration.

Events 758B, 760B, and 766B may be similar to events 758A, 760A, and 766A, respectively. In some implementations, after resuming DC, the UE 102 determines 742B to update the first MBS interest configuration, similar to events 342B and 442B. Accordingly, the UE 102 can transmit 743B a second MBS interest indication to the SN 106A (e.g., directly to the SN 106A or to the SN 106A via the MN 104) indicating the updated frequencies and/or list of MBS that the UE 102 is interested in receiving (i.e., a second MBS interest configuration). The SN 106A can then update 748B the first MBS interest configuration to the second MBS interest configuration.

Referring next to Fig. 8A, the UE 102 releases an MBS interest configuration after suspending a radio connection with an SN. In a scenario 800A, the base station 104 operates as an MN and the base station 106A operates as an SN. Similar to event 702A, the UE 102 operates in DC and communicates 802A with the MN 104 and the SN 106A. The SN 106A obtains 802A a first MBS interest indication (e.g., directly from the UE 102, from the MN 104, or from another base station). In some implementations, the MN 104 may release the first MBS interest indication after sending the first MBS interest indication to the SN 106A. In other implementations, the MN 104 may retain the first MBS interest indication after sending the first MBS interest indication to the SN 106A.

Later in time, the SN 106A can determine that data inactivity exists for the UE 102. In response, the SN 106A can transmit 861A an *Activity Notification* message with an inactive indication to the MN 104. In response, the MN 104 sends 863A an *SN Modification Request* message that includes an indication to suspend lower layers (e.g., PHY 202A/202B, MAC 204A/204B, and/or RLC 206A/206B) for the UE 102. The SN 106A then transmits 865A an *SN Modification Request Acknowledge* message to the MN 104. After receiving the *Activity Notification* message 861A, the MN 104 transmits 804A an *RRC suspension* message to the UE 102, which causes the UE 102 to suspend 808A the radio connection with the SN 106A. Depending on the implementation, the MN 104 may transmit 804A the *RRC suspension* message to the UE 102 before or after the transmitting 863A the *SN Modification Request,* or before or after receiving 865A the *SN Modification Request Acknowledge* message.

After suspending 808A the radio connection with the SN 106A, the UE 102 releases 832 the first MBS interest configuration. Likewise, the SN 106A also releases 831A the first MBS interest configuration. In some implementations, the SN 106A releases 831A the first MBS interest configuration in response to detecting that data inactivity exists for the UE 102 and before transmitting 861A the *Activity Notification* message. In other implementations, the SN 106A releases 831A the first MBS interest configuration after transmitting 861A the *Activity Notification* or 865A the *SN Modification Request Acknowledge* message, or after receiving 863A the *SN Modification Request.* Further, the MN 104, if the MN 104 previously obtained the first MBS interest indication, also releases 835A the first MBS interest configuration (e.g., in response to receiving the *Activity Notification* message and before or after transmitting 804A the *RRC suspension* message).

At a later time, the UE 102 may resume the suspended radio connection with the SN 106A. In some implementations, the SN 106A can detect data activity for the UE 102, and transmit 867A an *Activity Notification* with an active indication to the MN 104. In other implementations the MN 104 can detect data activity for the UE 102. For example, the MN 104 receives an Session Initiation Protocol (SIP) message for a mobile terminating call for the UE 102. In response, the MN 104 can transmit 869A a *Paging* message to the UE 102 to indicate that there is data activity for the UE 102. In response to the *Paging* message, the UE 102 transmits 810A an *RRC resume request* message to the MN 104. In some implementations, the UE 102 may not receive 869A a *Paging* message from the MN 104, but the UE 102 may transmit 810 the *RRC resume request* message to indicate to the MN 104 that the UE 102 has data to transmit.

In response to the *RRC resume request* message, the MN 104 transmits 890A to the SN 106A an *SN Modification Request* message that includes an indication to resume lower layers. The SN 106A resumes the lower layers for communicating with the UE 102 and transmits 892A an *SN Modification Request Acknowledge* message that includes an *RRC reconfiguration* message to the MN 104, which in turn transmits 812A an *RRC resume* message including the *RRC reconfiguration* message to the UE 102. The *RRC reconfiguration* message may include configuration(s) that the UE 102 can use to resume connectivity and communicate with the SN 106A. In response to the *RRC resume* message, the UE 102 resumes 822 the suspended radio connection with the SN. The UE 102 transmits 824A an *RRC resume complete* message including an *RRC reconfiguration complete* message to the MN 104, which in turn transmits 894A an *SN Reconfiguration Complete* message including the *RRC reconfiguration complete* message to the SN 106A. To resume connectivity with the SN 106A, the UE 102 performs 896A a random access procedure with the SN 106A using random access configuration(s) in the *RRC reconfiguration* message.

Further, similar to events 742A, if the UE 102 determines that the UE 102 is (interested in) receiving an MBS after resuming the suspended radio connection, the UE 102 can transmit 842A the first MBS interest indication to the SN 106A. The UE 102 can transmit 842A the first MBS interest indication directly to the SN 106A, or to the SN 106A via the MN 104.

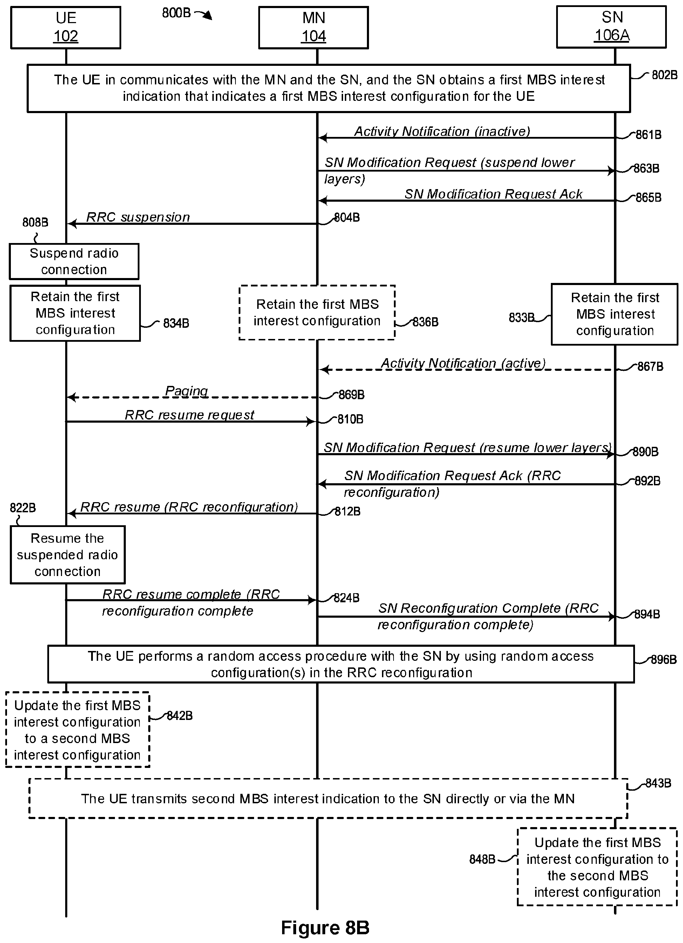

Turning to Fig. 8B, an example scenario 800B is generally similar to the scenario 800A, except that the UE 102 and the SN 106A retain rather than release the first MBS interest configuration after suspending the radio connection with the SN 106A.

Accordingly, events 802B, 861B, 863B, 865B, 804B, and 808B may be similar to events 802A, 861A, 863A, 865A, 804A, and 808A, respectively. In contrast to the scenario 800A, after suspending 808B the radio connection, the UE 102 retains 834B the first MNS interest indication. Similarly, the SN 106A retains 833B the first MBS interest configuration and the MN 104 retains 836B the first MBS interest configuration, if the MN 104 previously received the first MBS interest indication. Alternatively, the MN 104 releases the first MBS interest configuration, if the MN 104 previously received the first MBS interest indication.

Events 867B, 869B, 810B, 890B, 892B, 812B, 822B, 824B, 894B, and 896B may be similar to the events 867A, 869A, 810A, 890A, 892A, 812A, 822A, 824A, 894A, and 896A, respectively. Because the SN 106A retains 833B the first MBS interest configuration, the SN 106A may consider the first MBS interest configuration when generating configuration(s) to include in the *RRC reconfiguration* message.

In some implementations, after resuming 822B the suspended radio connection, the UE 102 determines 842B to update the first MBS interest configuration, similar to events 342B and 442B. Accordingly, the UE 102 can transmit 843B a second MBS interest indication to the SN 106A (e.g., directly to the SN 106A or to the SN 106A via the MN 104) indicating the updated frequencies and/or list of MBS that the UE 102 is interested in receiving (i.e., a second MBS interest configuration). The SN 106A can then update 848B the first MBS interest configuration to the second MBS interest configuration.

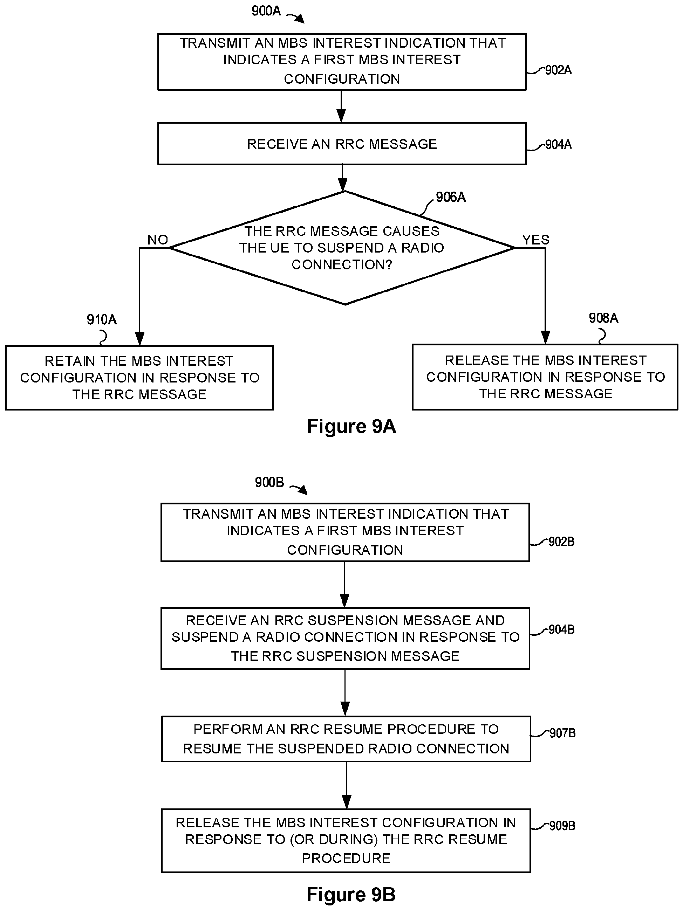

Figs. 9A-17 correspond to flow diagrams of example methods that a UE or one or more nodes (e.g., a CU, a DU, a base station, etc.) of a RAN can utilize to manage MBS interest information in accordance with the techniques of this disclosure. While Figs. 9A-17 and the accompanying descriptions refer specifically to the UE 102 and base stations of Figs. 1A-1B supporting 5G capabilities, it is understood that the following techniques may be implemented by other components and/or in systems other than the wireless communication system 100 of Fig. 1A to support other technologies, such as 6G radio access and/or a 6G core network, for example.

Turning first to Fig. 9A, an example method 900A can be implemented in a UE (e.g., the UE 102). At block 902A, the UE transmits an MBS interest indication to a node of the RAN (e.g., during events 302A-B, 402A-B, 502A-B, 602A-B, 702A-B, 802A-B). The MBS interest indication indicates a first MBS interest configuration for the UE. At a later time, at block 904A, the UE receives an RRC message from the RAN, which may be the same node that the UE transmitted the MBS interest indication to at block 902A (e.g., event 306A-B, 404A-B, 804A-B). At block 906A, if the received RRC message causes the UE to suspend a radio connection (e.g., the RRC message is an *RRC suspension* message) (e.g., event 308A-B, 408A-B, 808A-B), then the UE at block 908A releases the MBS interest configuration in response to the RRC message (e.g., event 332A, 432A, 832A). Alternatively, at block 906A, if the received RRC message does not cause the UE to suspend a radio connection, then the UE at block 910A retains the MBS interest configuration in response to the RRC message. Likewise, a node of the RAN also either releases or retains the MBS interest configuration in accordance with the behavior of the UE (e.g., the CU 172 in event 331A, the T-CU 172 in event 435A, the SN 106A in event 831A, the MN 104 in event 835A).

Referring to Fig. 9B, an example method 900B can be implemented in a UE (e.g., the UE 102). At block 902B, the UE transmits an MBS interest indication to a node of the RAN (e.g., during events 302A-B, 402A-B, 502A-B, 602A-B, 702A-B, 802A-B). The MBS interest indication indicates an MBS interest configuration. At a later time, at block 904B, the UE receives an *RRC suspension* message (e.g., event 306A-B, 404A-B, 804A-B) and suspends a radio connection in response to the *RRC suspension* message (e.g., event 308A-B, 408A-B, 808A-B).

At block 907B, the UE performs an RRC resume procedure to resume the suspended radio connection (e.g., events 350A-B, 450A-B, 810A-B, 812A-B, 822A-B, 824A-B). At block 909B, the UE releases the MBS interest configuration in response to, or during, the RRC resume procedure (e.g., events 332A, 432A, 832A). Depending on the implementation, the UE can release the MBS interest configuration before initiating the RRC resume procedure (e.g., before transmitting an *RRC resume request* message), in response to initiating the RRC resume procedure (e.g., in response to transmitting an *RRC resume request* message), during the RRC resume procedure, or after transmitting an *RRC resume complete* message. Likewise, a node of the RAN also releases the MBS interest configuration in accordance with the behavior of the UE (e.g., the CU 172 in event 331A, the T-CU 172 in event 435A, the SN 106A in event 831A, the MN 104 in event 835A).

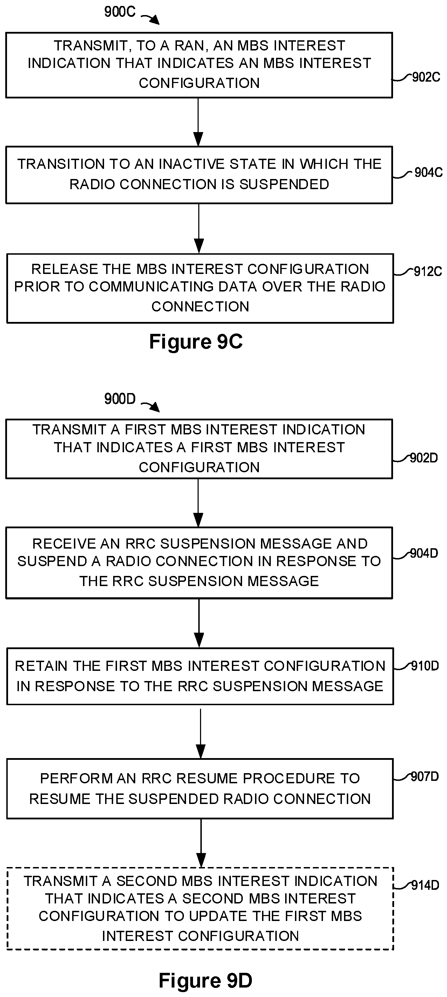

Referring now to Fig. 9C, an example method 900C can be implemented in a UE (e.g., the UE 102). At block 902C, the UE transmits an MBS interest indication to a RAN (e.g., the RAN 105) (e.g., during events 302A-B, 402A-B, 502A-B, 602A-B, 702A-B, 802A-B). The MBS interest indication indicates an MBS interest configuration for the UE. At block 904C, the UE transitions to an inactive state in which the radio connection with the RAN is suspended (e.g., 308A-B, 408A-B, 808A-B). At block 912C, the UE releases the MBS interest configuration prior to communicating data over the radio connection (e.g., prior to communicating data over a resumed radio connection) (e.g., 332A, 432A, 832A). Likewise, a node of the RAN also releases the MBS interest configuration in accordance with the behavior of the UE (e.g., the CU 172 in event 331A, the T-CU 172 in event 435A, the SN 106A in event 831A, the MN 104 in event 835A).

Referring now to Fig. 9D, an example method 900D can be implemented in a UE (e.g., the UE 102). At block 902D, the UE transmits a first MBS interest indication to a RAN (e.g., the RAN 105) (e.g., during events 302A-B, 402A-B, 502A-B, 602A-B, 702A-B, 802A-B). The first MBS interest indication indicates a first MBS interest configuration for the UE. At a later time, at block 904D, the UE receives an *RRC suspension* message (e.g., event 306A-B, 404A-B, 804A-B) and suspends a radio connection in response to the *RRC suspension* message (e.g., events 308A-B, 408A-B, 808A-B).

At block 910D, the UE retains the first MBS interest configuration in response to the *RRC suspension* message (e.g., events 334B, 434B, 834B). At block 907D, the UE performs an RRC resume procedure to resume the suspended radio connection (e.g., events 350B, 450B, 810B, 812B, 822B, 824B). In accordance with the behavior of the UE, a node of the RAN also retains the MBS interest configuration (e.g., the CU 172 in event 333B, the S-BS 106A in event 433B, the T-CU 172 after receiving the first MBS interest indication at event 464B, the SN 106A in event 833B, the MN 104 in 836B).

At block 914D, if the UE determines to update the first MBS interest configuration (e.g., because the UE does not want to receive MBS, or wants to indicate a different frequency or a different MBS than indicated by the first MBS interest indication), then the UE can transmit a second MBS interest indication to the RAN (e.g., via the resumed radio connection) (e.g., events 343B, 443B, 843B). The second MBS interest indication indicates a second MBS interest configuration for the UE.

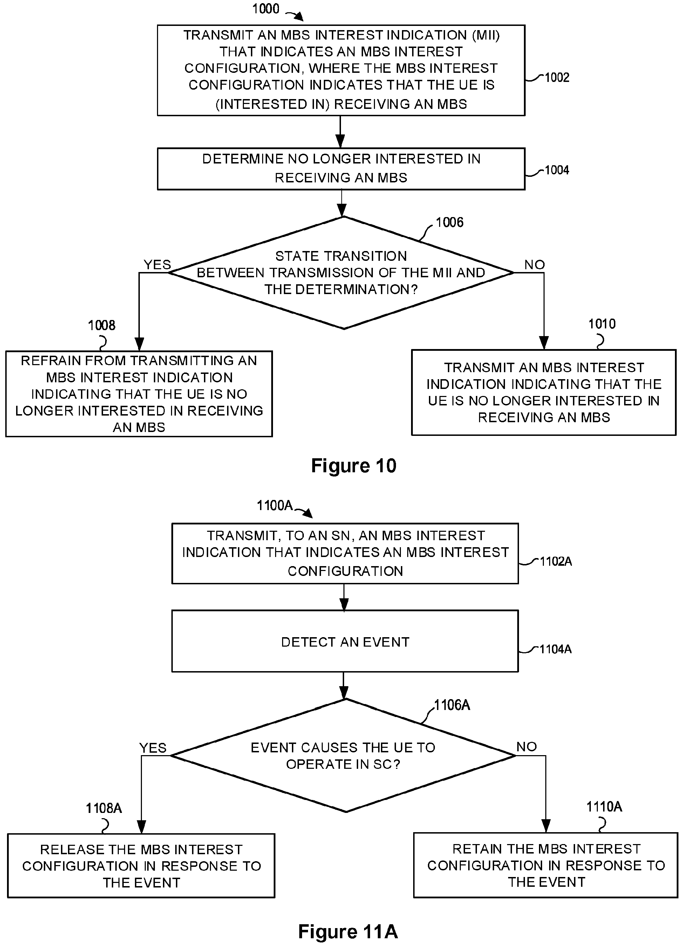

Turning to Fig. 10, an example method 1000 can be implemented in a UE (e.g., the UE 102). At block 1002, the UE transmits an MBS interest indication indicating an MBS interest configuration (e.g., during events 302A-B, 402A-B, 502A-B, 602A-B, 702A-B, 802A-B). The MBS interest configuration indicates that the UE is (interested in) receiving an MBS. At a later time, at block 1004, the UE determines that the UE is no longer interested in receiving an MBS (e.g., due to a change of user interest or of service availability). At block 1006, the UE determines whether the UE has performed a state transition (e.g., a state transition from RRC_CONNECTED to RRC_INACTIVE, or from RRC_CONNECTED to RRC_IDLE) between the transmission of the MBS interest indication and the determination that the UE is no longer interested in receiving an MBS.

If the UE has performed a state transition, then the UE, at block 1008, refrains from transmitting an MBS interest indication that indicates the UE is no longer interested in receiving an MBS (e.g., because the UE and a node of the RAN that the UE previously communicated with before suspending the radio connection, or that the UE is to communicate with, released the MBS interest configuration) (e.g., as in scenarios 300A, 400A, 800A).

If the UE has not performed a state transition (e.g., the UE remains in an RRC_CONNECTED state), then the UE at block 1010 transmits an MBS interest indication to the RAN indicating that the UE is no longer interested in receiving an MBS. Thus, the UE transmits an MBS interest indication (indicating that the UE is no longer interested in receiving an MBS) when the RAN should be informed, and the UE avoids transmitting an extraneous MBS interest indication during other circumstances.

Turning to Fig. 11A, an example method 1100A can be implemented in a UE (e.g., the UE 102) that is communicating in DC with an MN and an SN. At block 1102A, the UE transmits an MBS interest indication to an SN (e.g., during events 702A-B, 802A-B). The UE may transmit the MBS interest indication directly to the SN, or the SN may receive the MBS interest indication indirectly from the UE (e.g., via the MN). At a later time, at block 1104A, the UE detects an event relating to the radio connection of the UE with the SN (e.g., events 754A, 754B, the UE detects a failure that causes the UE to release the radio connection with the SN, the UE detects a failure on the radio connection with the SN that causes the UE to suspend the radio connection with the SN, or the UE detects a failure on the radio connection with the MN that causes the UE to suspend a radio connection with the MN but not disconnect from the SN). At block 1106A, the UE determines whether the event causes the UE to operate in SC (e.g., to release the radio connection with the SN, as in event 756A).

If the event causes the UE to operate in SC (e.g., the UE receives an RRC message indicating that the UE is to release the radio connection with the SN, or a UE detects a failure that causes the UE to release the radio connection with the SN), then the UE at block 1108A releases the MBS interest configuration (e.g., event 732A). Similarly, the SN releases the MBS interest configuration (e.g., event 731A), and the MN releases the MBS interest configuration if the MN previously obtained the MBS interest configuration (e.g., event 735A).

If the event does not cause the UE to operate in SC (e.g., the UE detects a failure on the radio connection with the SN that causes the UE to suspend the radio connection with the SN and suspend communication with the SN, or the UE detects a failure on the radio connection with the MN that causes the UE to suspend a radio connection with the MN but not disconnect from the SN), then the UE at block 1110A retains the MBS interest configuration.

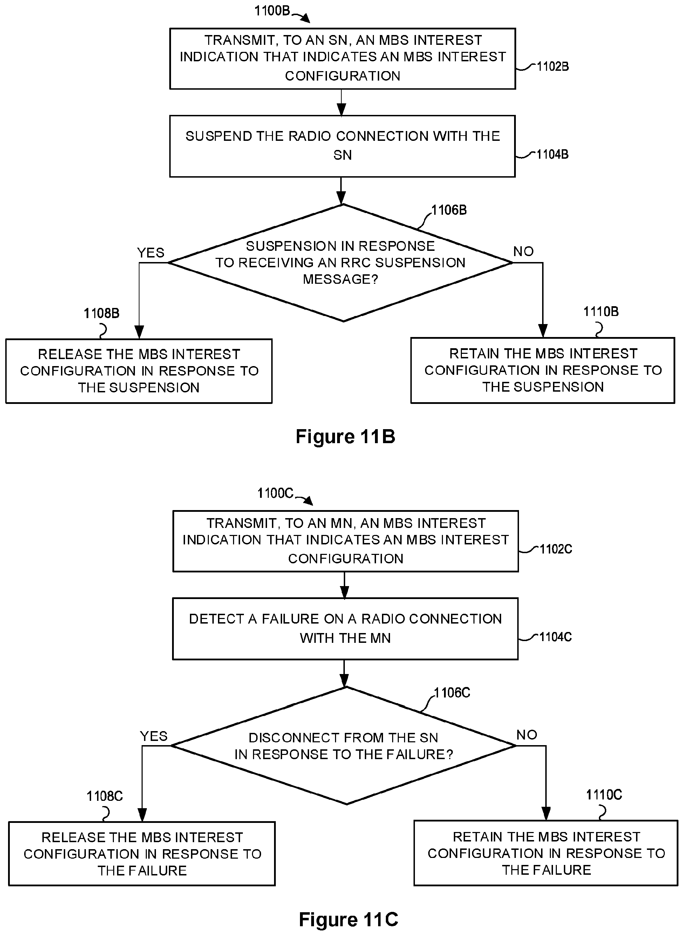

Turning to Fig. 11B, an example method 1100B can be implemented in a UE (e.g., the UE 102) that is communicating in DC with an MN and an SN. At block 1102B, the UE transmits an MBS interest indication to an MN (e.g., during events 702A-B, 802A-B). The UE may transmit the MBS interest indication directly to the SN, or the SN may receive the MBS interest indication indirectly from the UE (e.g., via the MN). At a later time, at block 1104B, the UE suspends the radio connection of the UE with the SN (e.g., events 808A-B). At block 1106B, the UE determines whether the suspension is in response to receiving an RRC suspension message.

If the suspension is in response to receiving an RRC suspension message (e.g., events 804A-B), then the UE at block 1108B releases the MBS interest configuration (e.g., event 832A). Similarly, the SN releases the MBS interest configuration (e.g., event 831A), and the MN releases the MBS interest configuration if the MN previously obtained the MBS interest configuration (e.g., event 835A).

If the suspension is not in response to receiving an RRC suspension message (e.g., the UE detects a failure on the radio connection with the SN that causes the UE to suspend the radio connection with the SN, or the UE suspends the radio connection with the SN in response to receiving an RRC reconfiguration message), then the UE at block 1110B retains the MBS interest configuration.

Turning to Fig. 11C, an example method 1110C can be implemented in a UE (e.g., the UE 102) that is communicating in DC with an MN and an SN. At block 1102C, the UE transmits an MBS interest indication to an MN (e.g., during events 302A-B, 402A-B, 502A-B, 602A-B, in scenarios where the BS 106A in Figs. 3A-3B, S-BS 106A in Figs. 4A-4B, BS 106A in Figs. 5A-5B, or S-BS 106A in Figs. 6A-6B operates as an MN). At a later time, at block 1104C, the UE detects a failure on the radio connection of the UE with the MN (e.g., events 572A-B, 672A-B). At block 1106C, the UE determines whether the UE disconnects from the SN in response to detecting the failure.

If the UE disconnects from the SN in response to detecting the failure, then the UE at block 1108C releases the MBS interest configuration (e.g., events 532A, 632A). Similarly, the MN releases the MBS interest configuration (e.g., events 531A, 631A). If the UE does not disconnect from the SN in response to detecting the failure (i.e., the UE still connects to the SN in response to detecting the failure), then the UE at block 1110C retains the MBS interest configuration.

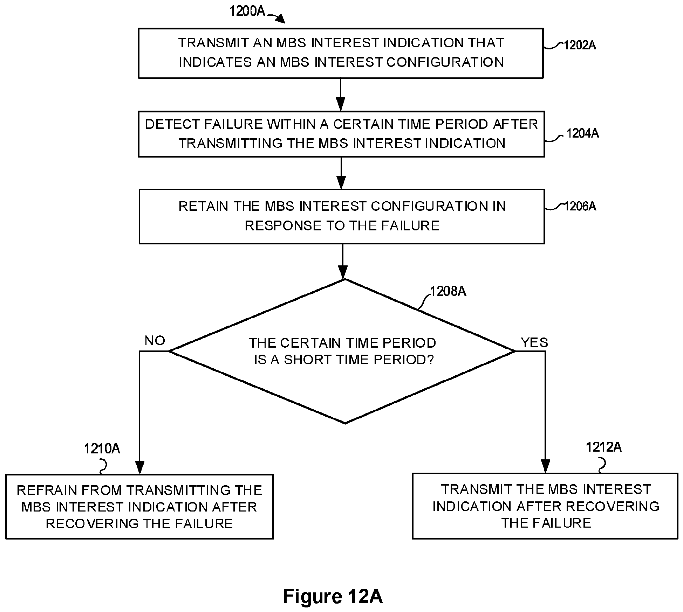

Referring now to Fig. 12A, a method 1200 can be implemented in a UE (e.g., the UE 102). At block 1202A, the UE transmits an MBS interest indication to the RAN (e.g., during events 302A-B, 402A-B, 502A-B, 602A-B, 702A-B, 802A-B). At block 1204A, the UE detects a failure (e.g., a radio link failure, a handover failure, or a reconfiguration failure) on a radio connection with the RAN (e.g., events 572A-B, 672A-B). In response to the failure, the UE at block 1206A retains the MBS interest configuration (e.g., events 534B, 634B).

At block 1208A, the UE determines whether the UE detected the failure within a certain time threshold (e.g., within a short predetermined time period such as approximately one second) after transmitting the MBS interest indication. If the UE detected the failure within a short time period after transmitting the MBS interest indication, the UE at block 1212A re-transmits the MBS interest indication after recovering the failure. For example, due to the failure, the UE may be unaware of whether the RAN successfully received the MBS interest indication, and therefore re-transmits the MBS interest indication. If the UE did not detect the failure within a short time period after transmitting the MBS interest indication, then the UE at block 1210A refrains from transmitting the MBS interest indication after recovering the failure.

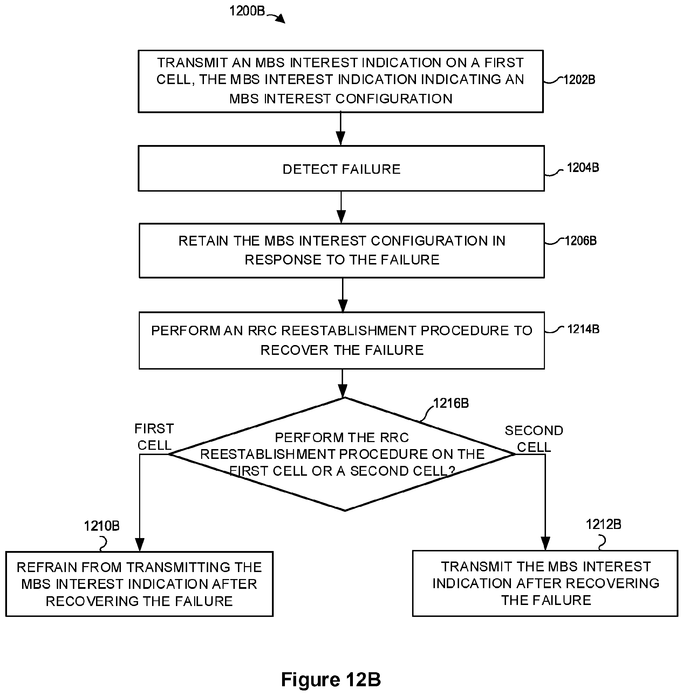

Turning to Fig. 12B, an example method 1200B can be implemented in a UE (e.g., the UE 102). At block 1202B, the UE transmits an MBS interest indication on a first cell of a RAN (e.g., during events 302A-B, 402A-B, 502A-B, 602A-B, 702A-B, 802A-B). At block 1204B, the UE detects a failure (e.g., a radio link failure, a handover failure, or a reconfiguration failure) on a radio connection with the RAN via the first cell (e.g., events 572A-B, 672A-B). The MBS interest indication indicates an MBS interest configuration. In response to the failure, the UE at block 1206B retains the MBS interest configuration (e.g., events 534B, 634B). Further, the UE at block 1214B performs an RRC reestablishment procedure to recover the failure (e.g., procedures 570B, 670B).

If the UE determines at block 1216B that the UE performed the RRC reestablishment procedure on the first cell, then the UE at block 1210B refrains from transmitting the MBS interest indication after recovering the failure (e.g., because the RAN node supporting the first cell also retains the MBS interest configuration). If the UE determines at block 1216B that the UE performed the RRC reestablishment procedure on a second cell that is different from the first cell, then the UE at block 1212B transmits the MBS interest indication after recovering the failure. For example, if the UE performs the RRC reestablishment procedure on the second cell, then the UE may be unaware of whether the base station supporting the second cell previously obtained the MBS interest indication, and therefore transmits the MBS interest indication after recovering the failure.

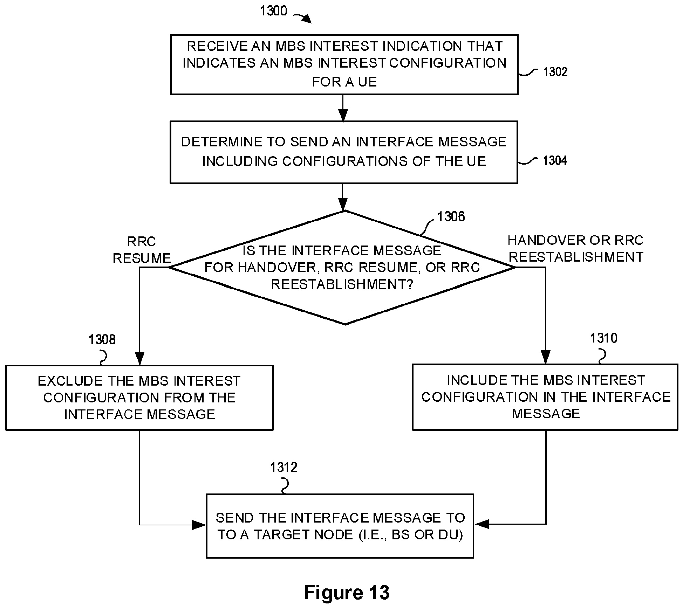

Turning to Fig. 13, an example method 1300 can be implemented in a source base station (S-BS) (e.g., a base station 104, 106A, or 106B of the RAN 105). At block 1302, the S-BS receives an MBS interest indication of a UE (e.g. the UE 102) (e.g., during events 302A-B, 402A-B, 502A-B, 602A-B, 702A-B, 802A-B). At block 1304, the S-BS determines to send an interface message to a target node (e.g., a different base station from the S-BS, of the base stations 104, 106A, or 106B, or a target DU 174) during an RRC procedure.

At block 1306, the S-BS determines whether the interface message is for handover, an RRC resume procedure, or an RRC reestablishment procedure. If the interface message is for an RRC resume procedure (e.g., procedure 450A), then at block 1308 the S-BS excludes the MBS interest indication from the interface message. If the interface message is for an RRC handover or an RRC reestablishment procedure (e.g., procedure 670A), then at block 1310 the S-BS includes the MBS interest indication in the interface message. Alternatively, in some implementations, the S-BS excludes the MBS interest indication from the interface message if the interface message is for an RRC reestablishment procedure.

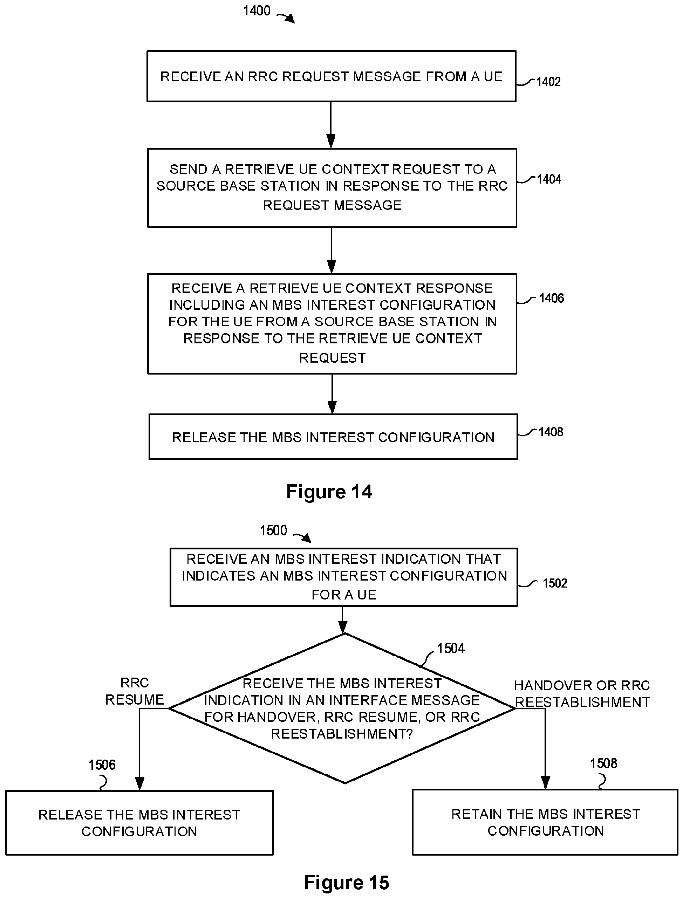

Turning to Fig. 14, an example method 1400 can be implemented in a target base station (T-BS) (e.g., a base station 104, 106A, or 106B of the RAN 105). At block 1402, the T-BS receives an *RRC request* message from a UE (e.g., the UE 102) (e.g., the *RRC resume request* message received at event 410A, an *RRC reestablishment request* message received at 674A). In response to the *RRC request* message, the T-BS at block 1404 sends a *Retrieve UE Context Request* message to a source base station (S-BS) (e.g., a different base station from the T-BS, of the base stations 104, 106A, or 106B) (e.g., event 462A, event 662A). In response to the *Retrieve UE Context Request* message, the T-BS at block 1406 receives a *Retrieve UE Context Response* message including an MBS interest indication of the UE from the S-BS (e.g., event 464A, event 664A). At block 1408, the T-BS releases the MBS interest configuration indicated by the MBS interest indication (e.g., event 435A, event 631A). Likewise, the UE also releases the MBS interest configuration (e.g., prior to transmitting the *RRC request* message, such as at events 432A, 632A).

Referring next to Fig. 15, an example method 1500 can be implemented in a target base station (T-BS) (e.g., a base station 104, 106A, or 106B). At block 1502, the T-BS receives an MBS interest indication that indicates an MBS interest configuration for a UE (e.g., from an S-BS). At block 1504, the T-BS determines a type of RRC procedure for which the T-BS received the MBS interest indication.

If the T-BS received the MBS interest indication for an RRC resume procedure (e.g., event 464A), then the T-BS at block 1506 releases the MBS interest configuration (e.g., event 435A). If the T-BS received the MBS interest indication for a handover procedure or an RRC reestablishment procedure (e.g., event 664B), then the T-BS at block 1508 retains the MBS interest configuration. Alternatively, in some implementations, the T-BS releases the MBS interest configuration if the interface message is for an RRC reestablishment procedure (e.g., event 631A).

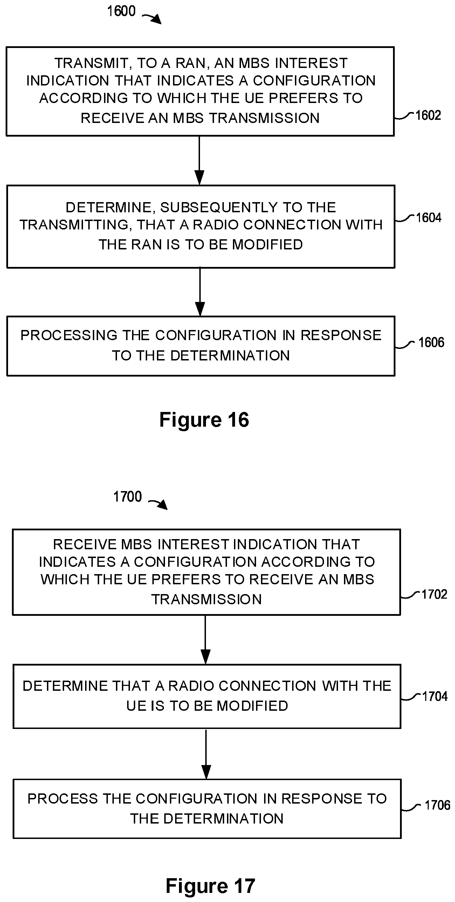

Turning to Fig. 16, an example method 1600 can be implemented in a UE (e.g., the UE 102) for managing information related to MBS, when the UE has a radio connection with a RAN (e.g., the RAN 105). The UE can perform the method 1600 using processing hardware (e.g., the processing hardware 150).

At block 1602, the UE transmits, to the RAN, an MBS interest indication that indicates a configuration according to which the UE prefers to receive an MBS transmission (e.g., an MBS interest indication that indicates an MBS interest configuration) (e.g., during events 302A-B, 402A-B, 502A-B, 602A-B, 702A-B, 802A-B). At block 1604, the UE determine, subsequently to transmitting the MBS interest indication, that the radio connection with the RAN is to be modified. For example, the UE may determine to suspend or release a radio connection, reestablish a radio connection (e.g., in response to detecting a failure on a radio connection), release a connection with an SN, or suspend a connection with an SN (e.g., in, or in response to, events 306A-308A, 306B-308B, 404A-408A, 404B-408B, 572A-B, 672A-B, 754A-756A, 754B-756B, 804A-808A, 804B-808B). At block 1606, the UE processes the configuration in response to the determination at block 1604 (e.g., events 332A, 334B, 432A, 434B, 532A, 534B, 632A, 634B, 732A, 734B, 832A, 834B). The UE can process the configuration by, for example, either releasing or retaining the configuration. The MBS interest indication may indicate one or more of a frequency on which the UE prefers to receive MBS, an MBS service, or a frequency on which the UE prefers to receive a particular MBS service.

Referring to Fig. 17, an example method 1700 can be implemented in a node of a RAN (e.g., the RAN 105) for managing information related to MBS, when a UE has a radio connection with the RAN. The node may be a base station (e.g., a base station 104, 106A, or 106B) or a CU (e.g., a CU 172) of the base station, and the node can perform the method 1700 using processing hardware (e.g., the processing hardware 130 or 140).

At block 1702, the node receives an MBS interest indication that indicates a configuration according to which the UE prefers to receive an MBS transmission (e.g., an MBS interest indication that indicates an MBS interest configuration) (e.g., (e.g., during events 302A-B, 402A-B, 502A-B, 602A-B, 702A-B, 802A-B, or in events 464A, 464B, 664A, 664B). At block 1704, the node determines that the radio connection with the UE is to be modified. For example, the node may determine to suspend a radio connection, resume a radio connection (e.g., in response to receiving an *RRC resume request* message), reestablish a radio connection (e.g., in response to receiving an *RRC reestablishment request* message), perform an SN release procedure, or suspend a connection between an SN and the UE (e.g., in, or in response to, events 304A-B, 404A, 412A, 464A, 404B, 412B, 464B, 576A-B,, 676A, 664A, 676B, 664B, 752A-B, 861A-B). At block 1706, the node processes the configuration in response to the determination at block 1704 (e.g., events 331A, 333B, 435A, 433B, 531A, 533B, 631A, 731A, 733B, 831A, 833B). The node can process the configuration by, for example, either releasing or retaining the configuration.

The following additional considerations apply to the foregoing discussion.

In some implementations, "message" is used and can be replaced by "information element (IE)". In some implementations, "IE" is used and can be replaced by "field". The description for the CU or DU can apply to an aggregated base station implementing communication functions of CU and DU for communicating with a UE. In case of the aggregated base station, the messages exchanged between the CU and DU can be omitted or seen as internal computer instructions or internal messages exchanged between different processes in the aggregated base station.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for managing MBS interest information through the disclosed principles herein. Thus, while particular embodiments and applications have been illustrated and described, it is to be understood that the disclosed embodiments are not limited to the precise construction and components disclosed herein. Various modifications, changes and variations, which will be apparent to those of ordinary skill in the art, may be made in the arrangement, operation and details of the method and apparatus disclosed herein without departing from the scope defined in the appended claims.

## Claims

1. A method (1600) in a user equipment, UE (102), for managing information related to multicast and/or broadcast services, MBS, when the UE (102) has a radio connection with a radio access network, RAN (105), the method comprising:
transmitting (1602), by the UE (102) to the RAN (105), an MBS interest indication that indicates a configuration according to which the UE (102) prefers to receive an MBS transmission;
detecting (1604), by the UE (102) and subsequently to the transmitting, a failure on the radio connection; and
retaining (1606), by the UE (102), the configuration at the UE (102) in response to the detecting.

2. The method of claim 1, further comprising:
updating, by the UE (102), the configuration to generate an updated configuration; and
transmitting, by the UE (102) to the RAN (105), an updated MBS interest indication that indicates the updated configuration.

3. The method of claim 2, wherein:
the MBS interest indication is transmitted to a first node of the RAN (105); and
the updated MBS interest indication is transmitted to a second node of the RAN (105).

4. The method of claim 1, further comprising:
determining whether the UE (102) detects the failure within a certain time threshold after transmitting the MBS interest indication; and
determining, based on whether the UE (102) detects the failure within the certain time threshold, whether the UE (102) is to re-transmit the MBS interest indication to the RAN (105) upon recovering the radio connection.

5. The method of claim 1, wherein:
the UE (102) transmits the MBS interest indication to the RAN (105) on a first cell, and
the method further comprises:
determining whether the UE (102) performs a re-establishment procedure on the first cell or a second cell in response to the detecting; and
transmitting the MBS interest indication to the second cell if the UE (102) performed the re-establishment procedure on the second cell.

6. A user equipment, UE (102), including processing hardware (150) and configured to implement a method according to any one of the previous claims.

7. A method (1700) in a node of a radio access network, RAN (105), for managing information related to multicast and/or broadcast services, MBS, when a user equipment, UE (102), has a radio connection with the RAN (105), the method comprising:
receiving (1702), by the node, an MBS interest indication that indicates a configuration according to which the UE (102) prefers to receive an MBS transmission;
determining (1704), by the node, that the UE (102) is reestablishing the radio connection; and
retaining (1706), by the node, the configuration at the node in response to the determination.

8. The method of claim 7, further comprising:
transmitting, by the node and subsequently to retaining the configuration, the MBS interest indication to a second node of the RAN (105).

9. The method of claim 8, wherein transmitting the MBS interest indication includes transmitting a response including the MBS interest indication to the second node in response to receiving a request from the second node for a UE context.

10. The method of claim 7, further comprising:
receiving, by the node, an updated MBS interest indication that indicates an updated configuration; and
updating, by the node, the configuration to the updated configuration.

11. The method of claim 7 or 10, wherein:
determining that the UE (102) is reestablishing the radio connection includes receiving from the UE (102) a request associated with a protocol for controlling radio resources; and
receiving the MBS interest indication includes:
transmitting, to a second node of the RAN (105), a request for a UE context in response to the request received from the UE (102); and
receiving, from the second node, a response including the MBS interest indication.

12. The method of claim 9 or 11, wherein the request for the UE context is a *Retrieve UE Context Request* message.

13. The method of claim 9 or 11, wherein the response including the MBS interest indication is a *Retrieve UE Context Response* message.

14. A node of a radio access network, RAN (105), including processing hardware (130, 140) and configured to implement a method according to any one of claims 7-13.

## Patentansprüche

1. Verfahren (1600) in einem Benutzergerät (user equipment, UE) (102), zum Verwalten von Informationen, die Multicast- und/oder Rundfunkdienste (multicast and/or broadcast services, MBS) betreffen, wenn das UE (102) eine Funkverbindung mit einem Funkzugangsnetz (radio access network, RAN) (105) aufweist, wobei das Verfahren Folgendes umfasst:
Übertragen (1602) einer MBS-Interessensangabe, die eine Konfiguration angibt, gemäß der das UE (102) bevorzugt eine MBS-Übertragung empfängt, durch das UE (102) an das RAN (105); wobei das Verfahren **gekennzeichnet ist durch**
Detektieren (1604) eines Ausfalls der Funkverbindung durch das UE (102) und nach dem Übertragen; und
Halten (1606) der Konfiguration an dem UE (102) durch das UE (102) als Reaktion auf das Detektieren.

2. Verfahren nach Anspruch 1, ferner umfassend:
Aktualisieren der Konfiguration, um eine aktualisierte Konfiguration zu erzeugen, durch das UE (102); und
Übertragen einer aktualisierten MBS-Interessensangabe, die die aktualisierte Konfiguration angibt, durch das UE (102) an das RAN (105).

3. Verfahren nach Anspruch 2, wobei:
die MBS-Interessensangabe an einen ersten Knoten des RAN (105) übertragen wird; und
die aktualisierte MBS-Interessensangabe an einen zweiten Knoten des RAN (105) übertragen wird.

4. Verfahren nach Anspruch 1, ferner umfassend:
Bestimmen, ob das UE (102) den Ausfall innerhalb eines bestimmten Zeitschwellenwerts nach dem Übertragen der MBS-Interessensangabe detektiert; und
Bestimmen, ob das UE (102) die MBS-Interessensangabe nach Rückgewinnen der Funkverbindung erneut an das RAN (105) übertragen soll, basierend darauf, ob das UE (102) den Ausfall innerhalb des bestimmten Zeitschwellenwerts detektiert.

5. Verfahren nach Anspruch 1, wobei:
das UE (102) die MBS-Interessensangabe an das RAN (105) auf einer ersten Zelle überträgt und
das Verfahren ferner Folgendes umfasst:
Bestimmen, ob das UE (102) als Reaktion auf das Detektieren eine Wiederherstellungsprozedur auf
der ersten Zelle oder einer zweiten Zelle durchführt; und Übertragen der MBS-Interessensangabe an die zweite Zelle, wenn das UE (102) die Wiederherstellungsprozedur auf der zweiten Zelle durchgeführt hat.

6. Benutzergerät, UE (102), das Verarbeitungshardware (150) beinhaltet und dazu konfiguriert ist, ein Verfahren nach einem der vorhergehenden Ansprüche zu implementieren.

7. Verfahren (1700) in einem Knoten eines Funkzugangsnetzes, RAN (105), zum Verwalten von Informationen, die Multicast- und/oder Rundfunkdienste, MBS, betreffen, wenn ein Benutzergerät, UE (102), eine Funkverbindung mit dem RAN (105) aufweist, wobei das Verfahren Folgendes umfasst:
Empfangen (1702) einer MBS-Interessensangabe, die eine Konfiguration angibt, gemäß der das UE (102) bevorzugt eine MBS-Übertragung empfängt, durch den Knoten; wobei das Verfahren **gekennzeichnet ist durch**
Bestimmen (1704), dass das UE (102) die Funkverbindung wiederherstellt, durch den Knoten; und
Halten (1706) der Konfiguration an dem Knoten durch den Knoten als Reaktion auf die Bestimmung.

8. Verfahren nach Anspruch 7, ferner umfassend:
Übertragen der MBS-Interessensangabe an einen zweiten Knoten des RAN (105) durch den Knoten und nach zum Halten der Konfiguration.

9. Verfahren nach Anspruch 8, wobei das Übertragen der MBS-Interessensangabe das Übertragen einer Reaktion beinhaltet, die die MBS-Interessensangabe an den zweiten Knoten als Reaktion auf das Empfangen einer Anfrage des zweiten Knotens für einen UE-Kontext beinhaltet.

10. Verfahren nach Anspruch 7, ferner umfassend:
Empfangen einer aktualisierten MBS-Interessensangabe, die eine aktualisierte Konfiguration angibt, durch den Knoten; und
Aktualisieren der Konfiguration auf die aktualisierte Konfiguration durch den Knoten.

11. Verfahren nach Anspruch 7 oder 10, wobei:
das Bestimmen, dass das UE (102) die Funkverbindung wiederherstellt, das Empfangen einer mit einem Protokoll zum Steuern von Funkressourcen zugeordneten Anfrage von dem UE (102) beinhaltet; und
das Empfangen der MBS-Interessensangabe Folgendes beinhaltet: Übertragen einer Anfrage für einen UE-Kontext als Reaktion auf die von dem UE (102) empfangene Anfrage an einen zweiten Knoten des RAN (105); und
Empfangen einer Reaktion, die die MBS-Interessensangabe beinhaltet, von dem zweiten Knoten.

12. Verfahren nach Anspruch 9 oder 11, wobei die Anfrage für den UE-Kontext eine *Nachricht zum Abrufen von UE-Kontext* ist.

13. Verfahren nach Anspruch 9 oder 11, wobei die Reaktion, die die MBS-Interessensangabe beinhaltet, eine *Nachricht zum Abrufen von UE-Kontext* ist.

14. Knoten eines Funkzugangsnetzes, RAN (105), der eine Verarbeitungshardware
(130, 140) beinhaltet und dazu konfiguriert ist, ein Verfahren nach einem der Ansprüche 7- 13 zu implementieren.

## Revendications

1. Procédé (1600) dans un équipement utilisateur, UE (102), pour gérer des informations relatives à des services de multidiffusion et/ou de diffusion, MBS, lorsque l'UE (102) dispose d'une connexion radio avec un réseau d'accès radio, RAN (105), le procédé comprenant :
la transmission (1602), par l'UE (102) au RAN (105), d'une indication d'intérêt MBS qui indique une configuration selon laquelle l'UE (102) préfère recevoir une transmission MBS ; le procédé est **caractérisé par**
la détection (1604), par l'UE (102) et ultérieurement à la transmission, d'une défaillance sur la connexion radio ; et
la conservation (1606), par l'UE (102), de la configuration au niveau de l'UE (102) en réponse à la détection.

2. Procédé selon la revendication 1, comprenant également :
la mise à jour, par l'UE (102), de la configuration pour générer une configuration mise à jour ; et
la transmission, par l'UE (102) au RAN (105), d'une indication d'intérêt MBS mise à jour qui indique la configuration mise à jour.

3. Procédé selon la revendication 2, dans lequel :
l'indication d'intérêt MBS est transmise à un premier nœud du RAN (105) ; et
l'indication d'intérêt MBS mise à jour est transmise à un second nœud du RAN (105).

4. Procédé selon la revendication 1, comprenant également :
le fait de déterminer si l'UE (102) détecte la défaillance dans un certain seuil de temps après la transmission de l'indication d'intérêt MBS ; et
le fait de déterminer, sur la base de la détection ou non par l'UE (102) de la défaillance dans le certain seuil de temps, si l'UE (102) doit retransmettre l'indication d'intérêt MBS au RAN (105) lors de la récupération de la connexion radio.

5. Procédé selon la revendication 1, dans lequel :
l'UE (102) transmet l'indication d'intérêt MBS au RAN (105) sur une première cellule, et
le procédé comprend également :
le fait de déterminer si l'UE (102) exécute une procédure de rétablissement sur la première cellule ou une seconde cellule en réponse à la détection ; et
la transmission de l'indication d'intérêt MBS à la seconde cellule si l'UE (102) a effectué la procédure de rétablissement sur la seconde cellule.

6. Équipement utilisateur, UE (102), comprenant du matériel de traitement (150) et configuré pour mettre en œuvre un procédé selon l'une quelconque des revendications précédentes.

7. Procédé (1700) dans un nœud d'un réseau d'accès radio, RAN (105), pour gérer des informations relatives à des services de multidiffusion et/ou de diffusion, MBS, lorsqu'un équipement utilisateur, UE (102), a une connexion radio avec le RAN (105), le procédé comprenant :
la réception (1702), par le nœud, une indication d'intérêt MBS qui indique une configuration selon laquelle l'UE (102) préfère recevoir une transmission MBS ; le procédé est **caractérisé par** la détermination (1704), par le nœud, du fait que l'UE (102) rétablit la connexion radio ; et
la conservation (1706), par le nœud, de la configuration au niveau du nœud en réponse à la détermination.

8. Procédé selon la revendication 7, comprenant en outre :
la transmission, par le nœud et à la suite de la retenue de la configuration, de l'indication d'intérêt MBS à un second nœud du RAN (105).

9. Procédé selon la revendication 8, dans lequel la transmission de l'indication d'intérêt MBS comprend la transmission d'une réponse comprenant l'indication d'intérêt MBS au second nœud en réponse à la réception d'une demande du second nœud pour un contexte UE.

10. Procédé selon la revendication 7, comprenant en outre :
la réception, par le nœud, d'une indication d'intérêt MBS mise à jour qui indique une configuration mise à jour ; et
la mise à jour, par le nœud, de la configuration vers la configuration mise à jour.

11. Procédé selon la revendication 7 ou 10, dans lequel :
la détermination que l'UE (102) rétablit la connexion radio comprend la réception de l'UE (102) d'une demande associée à un protocole de contrôle des ressources radio ; et
la réception de l'indication d'intérêt MBS comprend :
la transmission, à un second nœud du RAN (105), d'une demande de contexte UE en réponse à la demande reçue de l'UE (102) ; et la réception, en provenance du second nœud, d'une réponse incluant l'indication d'intérêt MBS.

12. Procédé selon la revendication 9 ou 11, dans lequel la demande de contexte UE est un message *de demande de récupération de contexte UE.*

13. Procédé selon la revendication 9 ou 11, dans lequel la réponse comprenant l'indication d'intérêt MBS est un message de *réponse de récupération de contexte UE.*

14. Nœud d'un réseau d'accès radio, RAN (105), comprenant du matériel de traitement (130, 140) et configuré pour mettre en œuvre un procédé selon l'une quelconque des revendications 7 à 13.
